## Europäisches Patentamt
## European Patent Office
## Office européen des brevets

(19)

(11) Veröffentlichungsnummer: **0 152 958**
**B2**

(12) **NEUE EUROPÄISCHE PATENTSCHRIFT**

(45) Veröffentlichungstag der neuen Patentschrift:
**27.12.89**

(21) Anmeldenummer: **85101957.0**

(22) Anmeldetag: **22.02.85**

(51) Int. Cl.⁴: **B 60 T 13/68**

(54) **Führerbremsventil.**

(30) Priorität: **23.02.84 DE 3406612**

(43) Veröffentlichungstag der Anmeldung:
**28.08.85 Patentblatt 85/35**

(45) Bekanntmachung des Hinweises auf die Patenterteilung:
**16.06.87 Patentblatt 87/25**

(45) Bekanntmachung des Hinweises auf die Entscheidung
über den Einspruch:
**27.12.89 Patentblatt 89/52**

(84) Benannte Vertragsstaaten:
**AT CH DE FR LI SE**

(56) Entgegenhaltungen:
**EP-A-0 026 725**
**EP-A-0 032 567**
**DE-A-3 149 110**
**FR-A-2 436 049**
**US-A-3 814 484**

**Firmandruckschrift TK 0022a der Firma Knorr-
Bremse-GmbH "Führerbremsventilanordnung HDR
für Streckenlok", Ausgabe 1974**
**G.A.Smith "Principles of Brake Control System
Design" International Conference on Railway
Braking, 26.-27. September 1979, University of New
York, pp. 37-43**

(73) Patentinhaber: **KNORR- BREMSE AG, Moosacher
Strasse 80 Postfach 401060, D-8000 München 40
(DE)**

(72) Erfinder: **Gerum, Eduard, Dr., Strassbergerstrasse
32, D-8000 München 40 (DE)**
Erfinder: **Hefter, Erik, Dr., Richard- Strauss-
Strasse 2a, D-8031 Eichenau (DE)**
Erfinder: **Kessel, Gerd, Dr., Lechweg 15, D-8037
Olching (DE)**
Erfinder: **Weissflog, Manfred,
Grossfriedrichsburger Strasse 7, D-8000 München
82 (DE)**

EP 0 152 958 B2

LIBER, STOCKHOLM 1989

## Beschreibung

Die Erfindung bezieht sich auf ein Führerbremsventil für selbsttätige, indirekt wirkende Druckluftbremsen von Schienenfahrzeugen gemäß dem Oberbegriff des Patentanspruches 1. Ein derartiges Führerbremsventil ist aus dem Vortrag C 156/79 "Principle of Brake Control System Design" aus "International Conference on Railway Braking", 26. bis 27.09.1979 bekannt. Dort wird mit elektronischen Mitteln ein Bremsanforderungssignal erzeugt, das einen elektro/pneumatischen Wandler ansteuert, der seinerseits einen pneumatischen Vorsteuerdruck zur Ansteuerung eines herkömmlichen Relaisventiles erzeugt. Das Relaisventil wirkt dann in bekannter Weise auf die Steuerung des Druckes einer Hauptluftleitung des Zuges.

Ein weiters elektronisch arbeitendes Führerbremsventil ist aus der EP-A-0 032 567 bekannt. Dort sind selbstabschließende, nicht-nachspeisende Vorsteuereinrichtungen zur Steuerung eines Vorsteuermediums vorgesehen, das entweder pneumatisch oder elektrisch sein kann. Eine Ventileinheit (Analogwandler) setzt das jeweilige Signalniveau des Vorsteuermediums in einen entsprechenden Vorsteuerdruck um, der ein Relaisventil ansteuert, welches den Druck in der Hauptluftleitung entsprechend dem Vorsteuerdruck steuert.

Die Vorsteuereinrichtungen (Eingabeeinheiten) sind hierbei als reine elektrische Schalter ausgebildet, deren Ausgangssignale unmittelbar auf die Magnetventile des Analogwandlers wirken. Um den Vorsteuerdruck in nicht linearer Weise von den Betätigungszeiten der elektrischen Schalter für die verschiedenen Vorgänge wie Bremsen, Lösen, Ausgleichen, Füllstoß etc. einstellen zu können, besitzt der bekannte Analogwandler aufwendige pneumatische Einrichtungen ähnlich den bekannten, rein pneumatischen Führerbremsventilen (vgl. Firmendruckschrift der Firma Knorr-Bremse GmbH "Führerbremsventilanordnung HDR für Streckenlok", Ausgabe 1974) (TK3 022a).

Aus der DE-A-3 149 110 ist eine Elektro-Druckmittelbremsanlage für direkt wirkende Bremsen von Kraftfahrzeugen bekannt, bei der der Bremsmitteldruck über von elektrischen Signalgebern angesteuerte Magnetventile unmittelbar verändert wird. Für selbsttätige, indirekt wirkende Druckluftbremsen von Schienenfahrzeugen ist diese Bremsanlage nicht geeignet.

Schließlich ist aus der EP-B-0 026 725 eine Regelschaltung für Flugzeugbremsen bekannt, bei der eine elektronische Regelschaltung direkt auf Elektro-Magnetventile wirkt, welche unmittelbar, d.h. also direkt, den Bremsmitteldruck verändern. Für indirekt wirkende Bremsen ist auch diese Anlage nicht geeignet.

Aufgabe der Erfindung ist es, das Führerbremsventil der eingangs genannten Art dahingehend zu verbessern, daß verbesserte Funktionen, insbesondere beim Löse-, Angleicher- und Füllvorgang erzielt werden.

Dadurch, daß auch beim Lösen der zulässige HL-Druck auf den am ersten Steuerventil maximal zulässigen Druck bezogen werden kann, erhält man ein schnelleres Lösen, das heißt, kürzere Lösezeiten (die von der zulässigen A-Druck-Überhöhung im Führerbremsventil abhängig sind). Aufbau und Abbau des A-Druckes sind von der Nachspeiseleistung und damit von der Zuglänge abhängig.

Wird aufgrund der gemessenen Nachspeiseleistung ein sehr langer Zug ermittelt. so kann sogar noch eine weitere A-Druckerhöhung eingeleitet werden.

Weitere Vorteile der Erfindung ergeben sich daraus, daß die Führerstände nur noch elektrische Vorsteuereinheiten aufweisen und keine pneumatischen Leitungen mehr im Führerstand vorhanden sein müssen. Man erhält hierdurch auch eine größere Flexibilität beim Einbau der Vorsteuereinheiten im Führerstand sowie durch die kleinere elektronische Vorsteuereinheit einen Platzgewinn im Gegensatz zu den voluminösen, rein pneumatischen Vorsteuereinheiten.

Zum Sicherheitskonzept des Führerbremsventils nach der Erfindung gehört es, daß die SIFA-Schleife die zentrale Elektronik nicht berührt. Selbst bei Ausfall der Elektronik ist somit noch eine Schnellbremsung möglich.

Die rein elektronische Bildung des Sollwertes (entweder zeit- oder stellungsabhängig) ermöglicht auch vielfältige Überwachungsfunktionen, die die Sicherheit vergrößern. So können mit einer verfeinerten Logik unzulässige Betriebszustände, wie gleichzeitiges Vorliegen einer Anforderung für Bremsen und Lösen sehr einfach erkannt werden. Auch kann in gewissen Grenzen überwacht werden, ob die einzelnen Baugruppen richtig funktionieren. Beispielsweise kann die richtige Funktion eines Gebers für den Bremssollwert (z. B. Potentiometer oder Stufenschalter) dadurch überwacht werden, daß ständig ein Basiswert ($U_0$) erzeugt wird, der überwacht werden kann. Dieser Basiswert wird vor der endgültigen Bereitstellung des Bremssollwertes ($U_{SOLL}$) subtrahiert, so daß hierdurch kein Fehler verursacht wird. Auch können sämtliche Versorgungsspannungen überwacht werden. Weitere Überwachungsfunktionen sind in der nachfolgenden Beschreibung angegeben.

Durch eine einfache Logik ist es auch möglich, bei Vorgabe des Bremsollwertes durch lineare Potentiometer ein Ansprungverhalten sicherzustellen. d. h., daß erst dann eingebremst wird, wenn das Bremsanforderungssignal einen definierten, vorgegebenen Wert, der der ersten Bremsstufe entspricht, erreicht hat. Konkurrierende Bremsanforderungssignale vom Führerbremshebel, einer automatischen Fahr- und Bremssteuerung (AFB), bzw. einer automatischen Zugsteuerung (ATC) werden durch eine Maximalwertauswahl verarbeitet, wodurch mit einfachen, elektronischen Mitteln sichergestellt ist, daß jeweils das maximale von mehreren Bremsanforderungssignal wirksam ist.

Anpassungen an unterschiedliche Normen, wie die amerikanische AAR-Norm, die europäische UIC-Norm etc., sind durch einfache schaltungstechnische Maßnahmen möglich. Bauliche Änderungen der pneumatischen Leistungseinheit sind nicht erforderlich.

Selbstverständlich ist es auch möglich, die gesamten Signalaufbereitungsfunktionen der Regellogik durch einen programmierten Mikroprozessor ausführen zu lassen, so daß Änderungen in einfacher Weise durch Programmänderungen durchführbar sind.

Im Folgenden wird die Erfindung anhand von Ausführungsbeispielen im Zusammenhang mit der Zeichnung ausführlicher erläutert. Es zeigt

Figur 1   eine Prinzipskizze des Führerbremsventiles nach der Erfindung

Figur 2   eine Prinzipskizze ähnlich Fig. 1, mit einer Weiterentwicklung des Führerbremsventiles nach der Erfindung;

Figur 3   eine ähnliche Prinzipskizze entsprechend Fig. 2 mit einer Modifikation für US-amerikanischen Standard (AAR);

Figur 4   eine Prinzipskizze ähnlich den Figuren 1 bis 3, mit zusätzlicher Einfügung einer Notbremsschleife;

Figur 5   eine Übersicht (Anschlußplan) zur Verdeutlichung des Zusammenhanges der Baugruppen gemäß den Gruppen 5A bis 5G

Figur 5A bis 5G Blockschaltbilder einzelner Baugruppen des Elektronikteils des Führerbremsventiles nach der Erfindung;

Figur 6   eine Modifikation des Blockierschaltbildes der Fig. 5 mit Erfassung der Nachspeiseleistung aus der HB-Leitung;

Figur 7   eine weitere Prinzipskizze des Führerbremsventiles nach der Erfindung mit detaillierterer Darstellung der Eingabegeräte;

Figur 8   eine Prinzipskizze zur Verdeutlichung des pneumatischen Teils des Führerbremsventiles nach der Erfindung; Zum Verdeutlichen der Fig. 8 zeigen die

Figur 8A bis 8K Ausschnitte aus der Fig. 8 in vergrößertem Maßstab. Werden die Fig. 8A bis 8K im Schema nach

Figur 8L aneinandergefügt, so ergeben sie die vollständige Fig. 8 in vergrößertem Maßstab. Aus der so zusammengefügten Fig. 8 in größerem Maßstab sind alle Einzelheiten und Beschriftungen klar ersichtlich.

Weiterhin zeigen;

Figur 9A bis 9G eine Tabelle der logischen Zustände der Eingabeeinheiten sowie die in Abhängigkeit von diesen Zuständen ausgeführte Funktion;

Figur 10  ein Zeitdiagramm des Strömungsmitteldurchflusses durch die HB-Leitung zur Erläuterung der «Funktion Zugtrennung erfassen»;

Figur 11  die Zuordnung des HL-Druckes zu dem Bremssollwert (einschließlich Ansprungsverhalten);

Figur 12  den zeitlichen Verlauf des gradientenbegrenzten Drucksollwertes bei Bremsen und Lösen;

Figur 13  den zeitlichen Verlauf der Drucksollwertüberhöhung beim manuellen Ausgleichen;

Figur 14  den zeitlichen Verlauf des Drucksollwertes des automatischen Ausgleichers beim Vollbremsen und Lösen; und

Figur 15  den zeitlichen Verlauf des Drucksollwertes und des Ausgleichwertes beim Füllstoß. Gleiche bzw. einander entsprechende Teile in den einzelnen Figuren sind mit gleichen Bezugszeichen benannt.

Das Führerbremsventil nach der Erfindung bildet die Funktion herkömmlicher, pneumatischer Führerbremsventile mit elektronischen Mitteln nach. Das Führerbremsventil besteht grundsätzlich aus einem elektronischen Vorsteuerkreis zur Bildung des Vorsteuerdruckes (A-Druckes) und einem pneumatischen Leistungsteil. Pro Triebfahrzeug ist ein Führerbremsventil vorgesehen, das von zwei Führerständen FSA und FSB angesteuert werden kann. Ein zusätzlicher Eingriff ist durch AFB- und ATC-Steuersignale möglich. Damit ist das Führerbremsventil auch für automatisches Fahren und Bremsen geeignet.

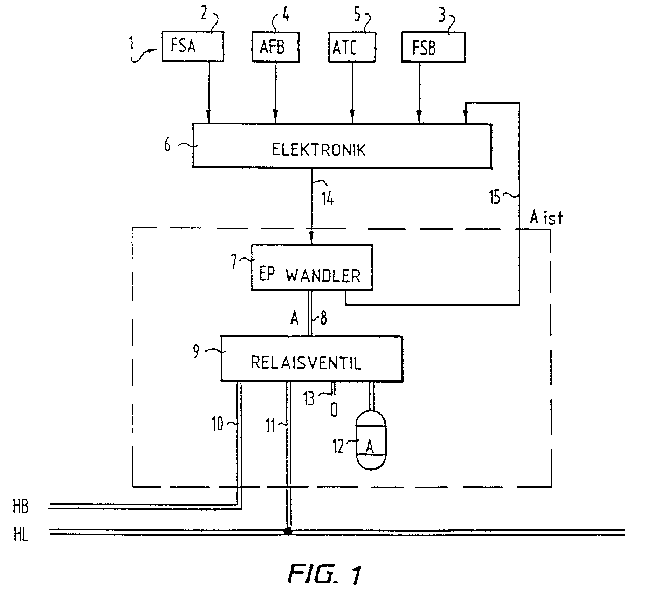

Zunächst sei auf die Figuren 1 bis 4 Bezug genommen. Eine Eingabeeinheit 1 besitzt folgende Untergruppen:

Bezugszeichen 2: Eingabeeinheit eines Führerstandes A
Bezugszeichen 3: Eingabeeinheit für einen Führerstand B,
Bezugszeichen 4: Eingabeeinheit «AFB» einer automatischen Fahr- und Bremssteuerung und
Bezugszeichen 5: Eingabeeinheit «ATC» (automatische Zugsteuerung) (automatic train control).

Bezugszeichen 5: Eingabeeinheit «ATC» (automatische Zugsteuerung) (automatic train control).

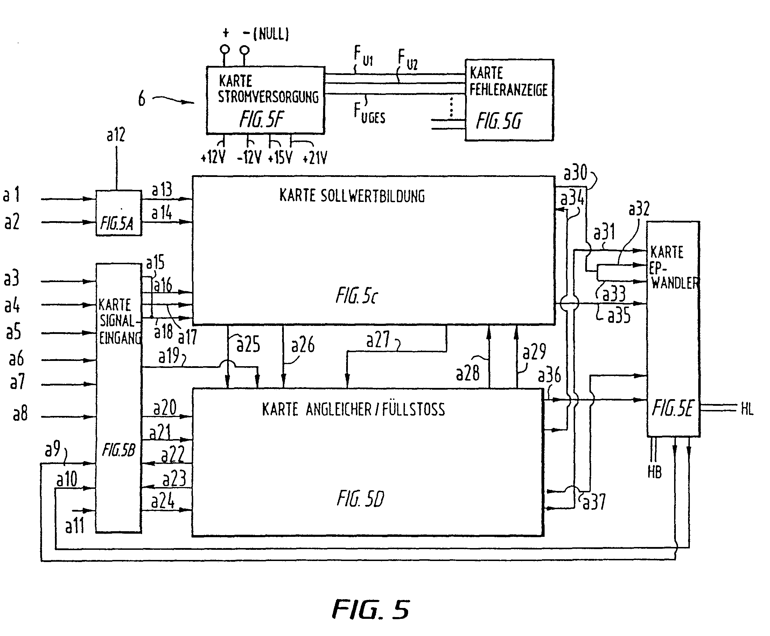

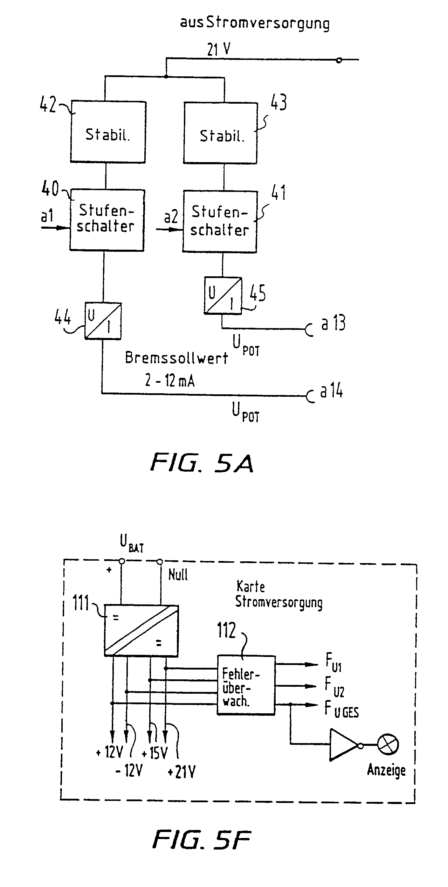

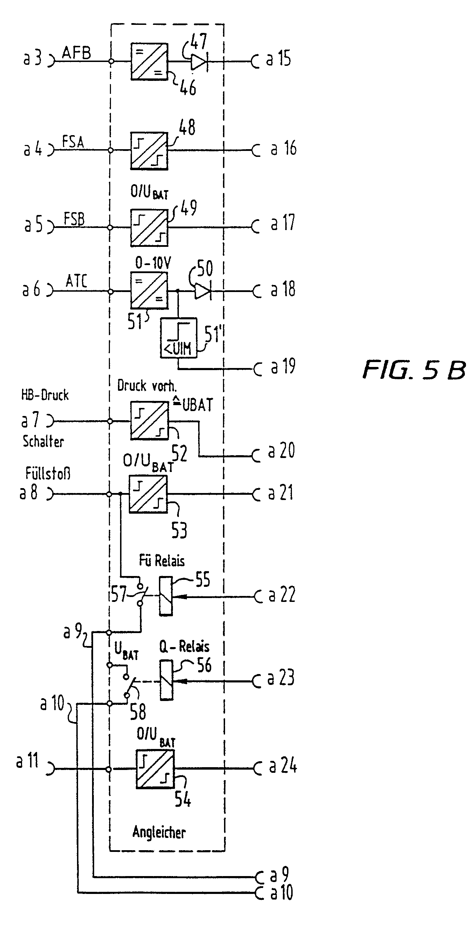

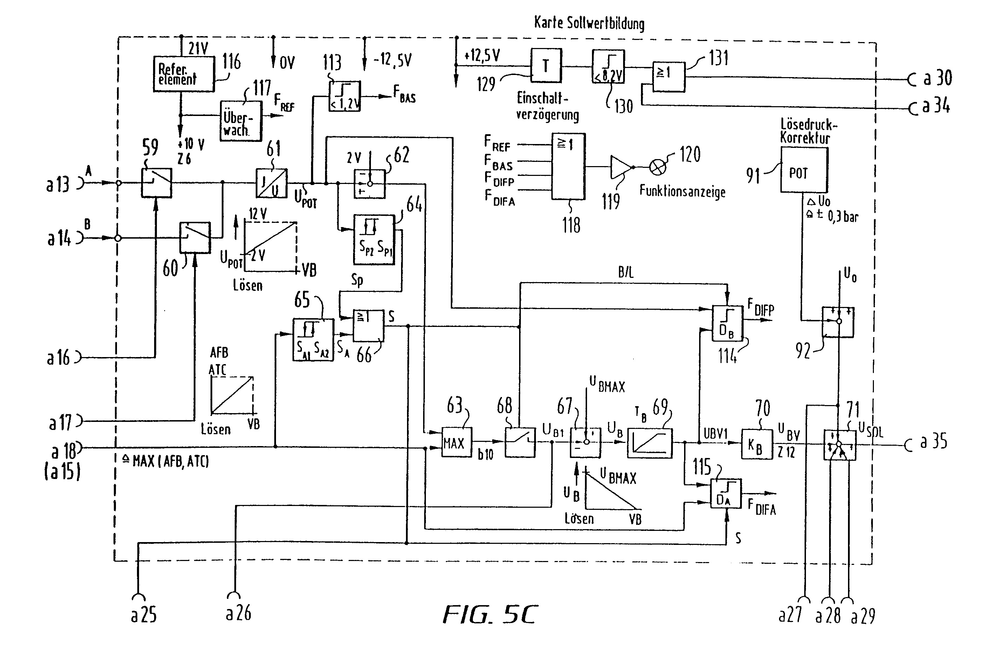

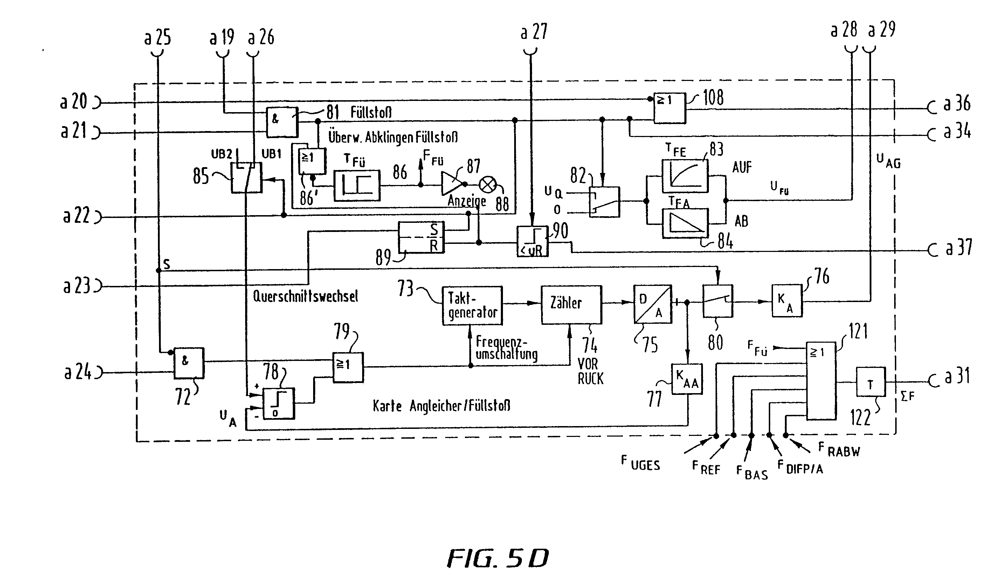

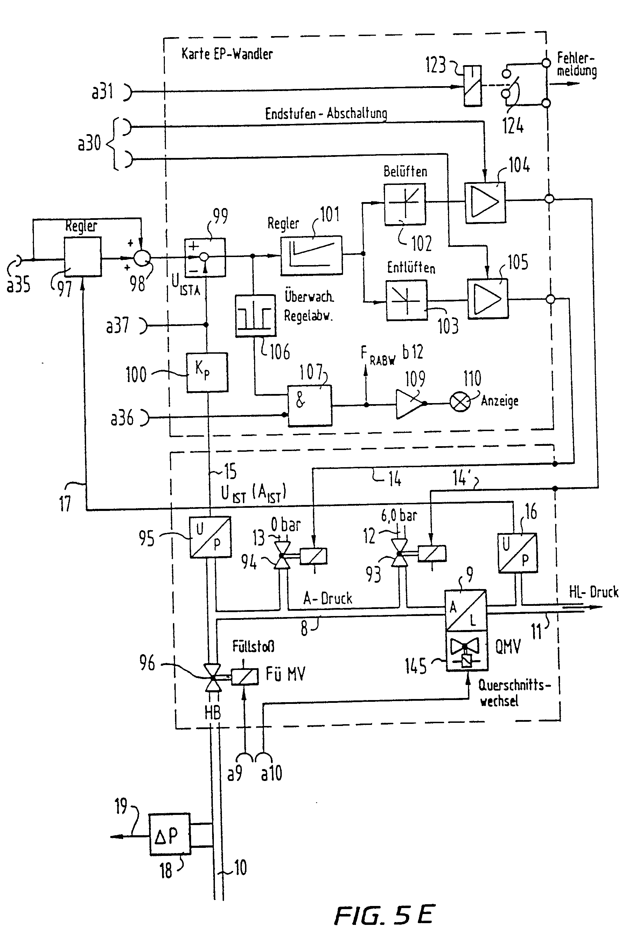

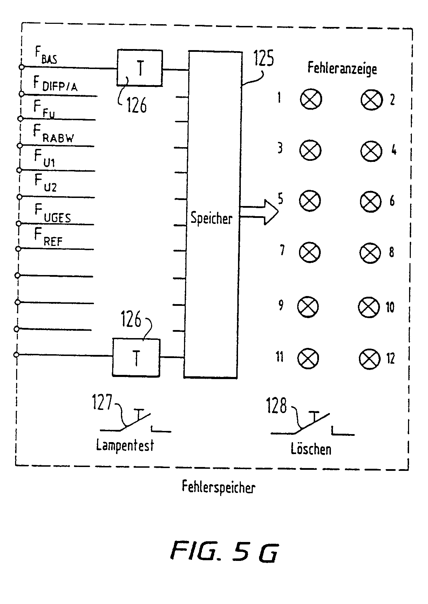

Die Ausgangssignale der Eingabeeinheit 1 werden einer Elektronik 6 (vgl. insbesondere Fig. 5) zugeführt, in welcher ein elektrisches Signal für einen Sollwert des Vorsteuerdruckes - im folgenden «A-Druck» genannt - ermittelt wird, das über eine Leitung 14 einem elektropneumatischen Wandler 7 zugeführt wird. Der Ausgang des EP-Wandlers 7 wird durch eine pneumatische Steuerleitung 8 gebildet, Druckmedium mit dem A-Druck führt. Dieser A-Druck wird einem Relaisventil 9 mit im Prinzip bekannter Bauart zugeführt, wodurch dann in bekannter Weise der Druck einer Hauptluftleitung - im Folgenden «HL» genannt - eingestellt wird. Das Relaisventil 9 ist in bekannter Weise an eine Hauptbehälterleitung - im Folgenden HB-Leitung genannt - angeschlossen, über welche die Nachspeisung mit Druckmittel erfolgt. Weiterhin ist das Relaisventil an einen A-Druck-Behälter 12 angeschlossen und weist schließlich eine Entlüftung 13 zur Atmosphäre auf.

Im EP-Wandler 7 ist auch ein Druckaufnehmer für den A-Druck vorgesehen, der ein dem A-Druck sprechendes elektrisches Signal über eine Leitung 15 der Elektronik 6 zuführt.

Wie durch die gestrichelte Linie angedeutet, sind der EP-Wandler 7, das Relaisventil 9 und der A-Behälter 12 konstruktiv zu einer Einheit zusammengefaßt.

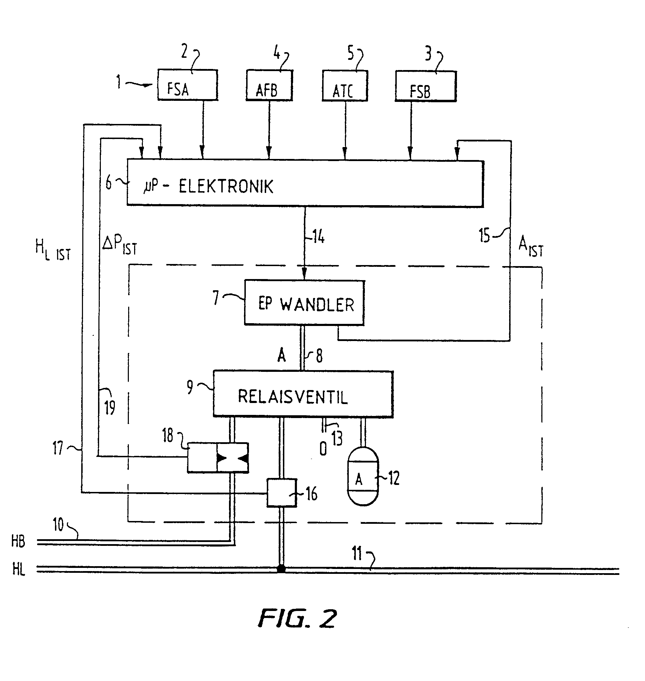

Fig. 2 enthält eine Modifikation, bei der der HL-Druck in der Leitung 11 durch einen Druck-Spannungswandler 16 erfaßt und über eine Leitung 17 zu der Elektronik 6 gemeldet wird. Weiterhin wird Druckmittelströmung in der HB-Leitung 10 von einem Strömungssensor 18 erfaßt und über eine Leitung 19 der Elektronik 6 gemeldet. Als Strömungssensor 18 wird in besonders einfacher Weise eine Blende in der HB-Leitung vorgesehen, an deren beiden Seiten je ein Druckaufnehmer angebracht ist, wobei der Differenzdruck $\Delta P_s$ der beiden Druckaufnehmer ein Maß für die an der Blende vorbeifließende Strömungsmittelmenge (Volumen pro Zeiteinheit) ist. Es sind jedoch auch andersartige Strömungs- oder Luftmengensensoren verwendbar.

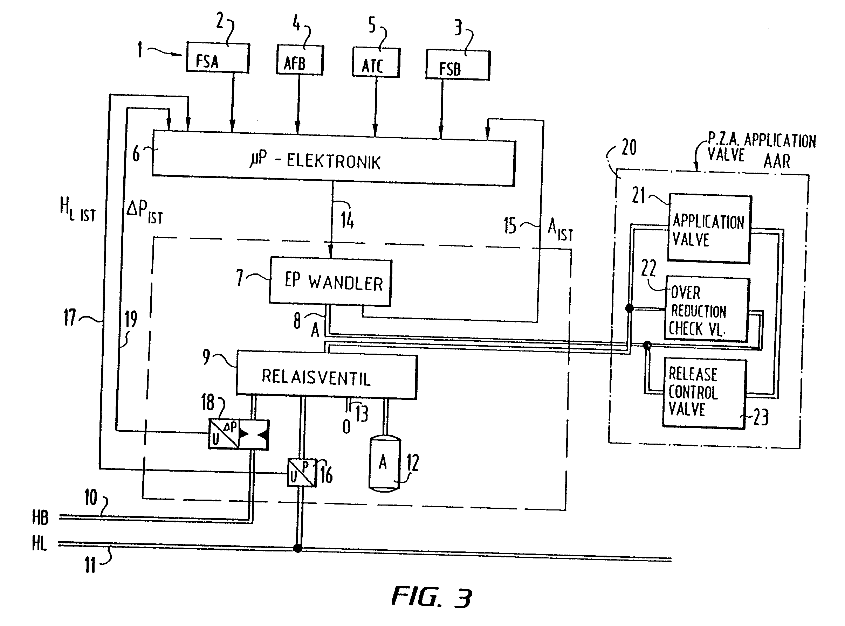

Fig. 3 zeigt eine Modifikation der Figur 2 in Anpassung an die US-amerikanischen Vorschriften den AAR (American Association of Railways). Durch diese Modifikation kann das Führerbremsventil auch entsprechend der AAR-Norm eingesetzt werden. Nach dieser Norm hat der A-Druck nicht nur die Funktion eines stabilisierenden Steuerdruckes, sondern ist auch Bestandteil der Sicherheitsphilosophie. Zu diesem Zweck besteht keine direkte Verbindung zwischen A-Druck-Regler (hier Elektronik 6 mit EP-Wandler 7) und Relaisventil 9. Vielmehr sind in die A-Druck-Leitung 8 fahrzeugseitige Kontrollorgane zwischengeschaltet, die zum Beispiel bei Zwangsbremsung den A-Druck nach Null entlüften und dadurch erst eine direkte Entlüftung der HL-Leitung im Relaisventil einleiten. Nach AAR-Norm tritt der A-Druck nicht nur im Relaisventil auf, es besteht vielmehr je eine Hin- und Rückleitung zu anderen Kontrollorganen 21, 22 und 23. Im einzelnen gelangt der A-Druck aus dem EP-Wandler 7 zu zwei Steuerventilen 22 und 23, von dort über das Ventil 22 direkt zu dem Relaisventil 9 bzw. über das Ventil 23 zu einem Ventil 21 und von dort zu dem Relaisventil 9.

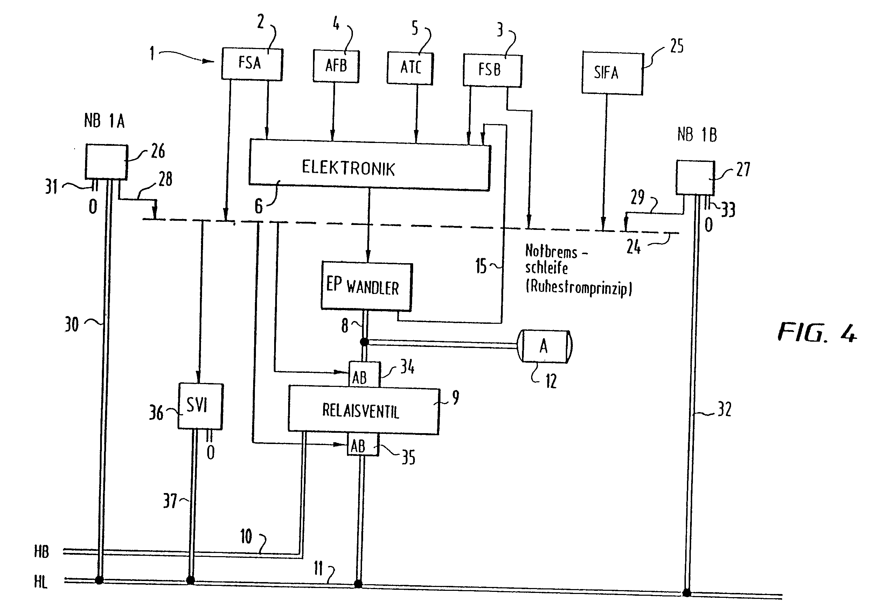

Fig. 4 zeigt eine weitere Modifikation mit Notbremsschleife 24, die nach dem Ruhestromprinzip arbeitet. Zum einen sind auf beiden Führerständen Notbremsventile 26 und 27 angeordnet, die über Leitungen 30 bzw. 32 direkt mit der Hauptluftleitung 11 verbunden sind und diese unmittelbar zur Atmosphäre hin über Auslässe 31 bzw. 32 entlüften. Bei Betätigung der Notbremsventile 26 bzw. 27 gelangen elektrische Signale über Leitungen 28 bzw. 29 zu der Notbremsschleife 24. Weiterhin können von den Eingabegeräten 2 und 3 sowie einem SIFA-Schalter 25 Signale auf die Notbremsschleife 24 gegeben werden. In Abhängigkeit von solchen Signalen werden ein Absperrventil 34 in der A-Druck-Leitung 8 am Eingang des Relaisventils 9 sowie ein Absperrventil 35 zwischen Relaisventil 9 und Hauptluftleitung 11 betätigt, um im Notbremsfall das Relaisventil 9 abzuschalten bzw. eine Nachspeisung von Druckmittel zu verhindern. Schließlich wirken elektrische Signale der Notbremsschleife 24 auch auf ein Schnellbremsventil 36, welches über eine an die Hauptluftleitung 11 angeschlossene Leitung 37 den HL-Druck zur Atmosphäre hin entspannt.

Fig. 5 mit den Figuren 5A bis 5G zeigt das Kernstück der Erfindung, nämlich die Elektronik 6 und den EP-Wandler 7. Der Anschlußplan gemäß Fig. 5 verdeutlicht die Verbindung der Baugruppen gemäß den Fig. 5A bis 5G. Verbindet man die Fig. 5A bis 5G an den jeweils gleichnamigen Anschlüssen a1 bis a37, so erhält man ein vollständiges Blockschaltbild der Elektronik und des EP-Wandlers.

Die Anschlüsse der Stromversorgung sind in Fig. 5 nicht detailliert dargestellt ebenso die Anschlüsse der Karte «Fehleranzeige». Die jeweils mit F und einem Index bezeichneten Fehlersignale werden den mit dem entsprechenden Namen bezeichneten Anschlüssen der Karte gemäß 5G zugeführt.

Die Elektronik besitzt folgende Hauptgruppen;

- Eingabe Betriebsbremsung (Fig. 5A)
- Signaleingang zur (galvanisch getrennten) Übernahme der sonstigen Eingangssignale (Fig. 5B)
- Karte für Sollwertbildung (Fig. 5C) sowie
- Karte für Angleicher- und Füllstoß-Funktion (Fig. 5D), welche zusammen die eigentliche Logik zur Nachbildung der Funktion des Führerbremsventiles bilden
- Karte EP-Wandler (Fig. 5E) zur hochgenauen, proportionalen Spannung-Druck-Umsetzung der Ausgangssignale der Logik in den A-Druck, welcher dann von dem Relaisventil in den HL-Druck umgesetzt wird. Zum EP-Wandler gehört ein elektro-pneumatischer Teil mit Einlaß- und Auslaßmagnetventil, Druckaufnehmern zur Erfassung des Vorsteuerdruckes A und des HL-Druckes sowie nach einer Modifikation der Erfindung ein Differenz-Druckaufnehmer bzw. Strömungssensor zum Erfassen des Volumenstromes der HB-Leitung.
- Karte Fehleranzeige bzw. Speicher (Fig. 5G).
- Karte Stromversorgung und Fehleranzeige (Fig. 5F)

Von den beiden Führerständen 2 und 3 kommen jeweils;

Ein analoger Drucksollwert U-$_{POT}$ der über Stufenschalter 40 bzw. 41, (die wahlweise auch als Potentiometer oder Signalgeber, der in Abhängigkeit von der Zeitdauer des Betätigens eines Tasters sich zeitlich ändernde Signale erzeugt, ausgebildet sein können), vorgegeben wird. Über SpannungsStabilisierschaltungen 42 bzw. 43 sind die Stufenschalter 40 bzw. 41 mit der Stromversorgung (hier Anschluß für 21 V) der Karte «Stromversorgung» gemäß Fig. 5F verbunden. Die Ausgänge der Stufenschalter 40 bzw. 41 werden über Spannungs-Stromwandler 44 bzw. 45 in Stromwerte umgewandelt und als Signale «U$_{POT}$» an den Anschlüssen A13 bzw. A14 ausgegeben. Diese Anschlüsse sind mit den gleichnamigen Anschlüssen A13 bzw. A14 der Karte «Sollwertbildung» gemäß Fig. 5C verbunden. Die Anschlüsse al bzw. a2 der Fig. 5A symbolisieren hier einen Führerbremshebel, der vom Lokomotivführer bedient wird.

Weitere Signaleingänge werden der Karte «Signaleingang» gemäß 5B zugeführt. Es handelt sich hier um folgende Signale:

AFB (automatische Fahr- und Bremssteuerung) am Anschluß a3 als analoger Strom- bzw. Spannungswert, der über eine galvanische Entkopplung 46 und eine Diode 47, welche zusammen mit einer Diode 50 zur Maximalwertauswahl dient, am Anschluß a15 erscheint.

Digitale Steuersignale FSA bzw. FSB (Anschluß a4 bzw. a5) zur Unterscheidung der Führerstände. Diese Signale werden über galvanische Trennungen 48 bzw. 49 an die Anschlüsse A16 bzw. A17 weitergeleitet.

Ein analoger Strom- bzw. Spannungswert «ATC» der automatischen Zugsteuerung (Anschluß A6). der über eine galvanische Trennung 51 und die Diode 50 am Anschluß a18 erscheint. Die Anschlüsse a15 und a18 sind miteinander verbunden und mit dem Anschluß a18 der Karte «Sollwertbildung» (Fig. 5C) verbunden, so daß dort das größere der beiden Signale AFB bzw. ATC anliegt.

Für die weiter unten erläuterte Füllstoßfunktion wird das Ausgangssignal der galvanischen Trennung 50 über einen Schwellwertschalter 51' an dem Anschluß a19 ausgegeben.

Am Anschluß a7 steht ein Signal eines HB-Druckschalters an, das anzeigt, ob der HB-Druck einen bestimmten Wert erreicht hat. Über eine galvanische Trennung 52 wird dieses Signal an dem Anschluß a20 ausgegeben. Ein Füllstoßsignal von einem Taster bzw. Schalter im Führerstand liegt an dem Anschluß a8 an und wird über eine galvanische Trennung 53 an den Anschluß a21 weitergeleitet. In ähnlicher Weise steht ein Signal eines Tasters für die Angleicherfunktion an dem Anschluß a11 an und wird über eine galvanische Trennung 54 an den Anschluß A24 weitergegeben. Weiterhin enthält die Karte «Signaleingang» ein Relais 55 (Füllstoßrelais) sowie ein Relais 56 (Querschnittswechsel-Relais). die über Signale an den Anschlüssen A22 bzw. A23 betätigt werden. Das Relais 55 betätigt einen Schalter 57. welcher die Anschlüsse a8 und a9 miteinander verbindet. Das Relais 56 betätigt einen Schalter 58, der den Anschluß a10 mit Batteriespannung U$_{BAT}$ verbindet.

Die Übergabeschnittstellen sind so ausgeführt, daß bei Signalunterbrechung (z. B. Leitungsbruch) automatisch ein sicherer Bremssollwert vorgegeben wird. Bei Leitungsunterbrechung entstehen daher folgende Werte

| | |
|---|---|
| – U$_{POT}$ | max. Spannung |
| – ATC | max. Spannung |
| – AFB | max. Spannung |
| – Angleicher | kein Signal |
| – Füllstoß | kein Signal |
| – Führerstandumschaltung (FSA, FSB) | kein Signal |

Das gleiche gilt für wichtige Verbindungen zwischen den einzelnen Karten, beispielsweise für den Drucksollwert U$_{SOLL}$ der Karte «Sollwertbildung» (Analogwandler).

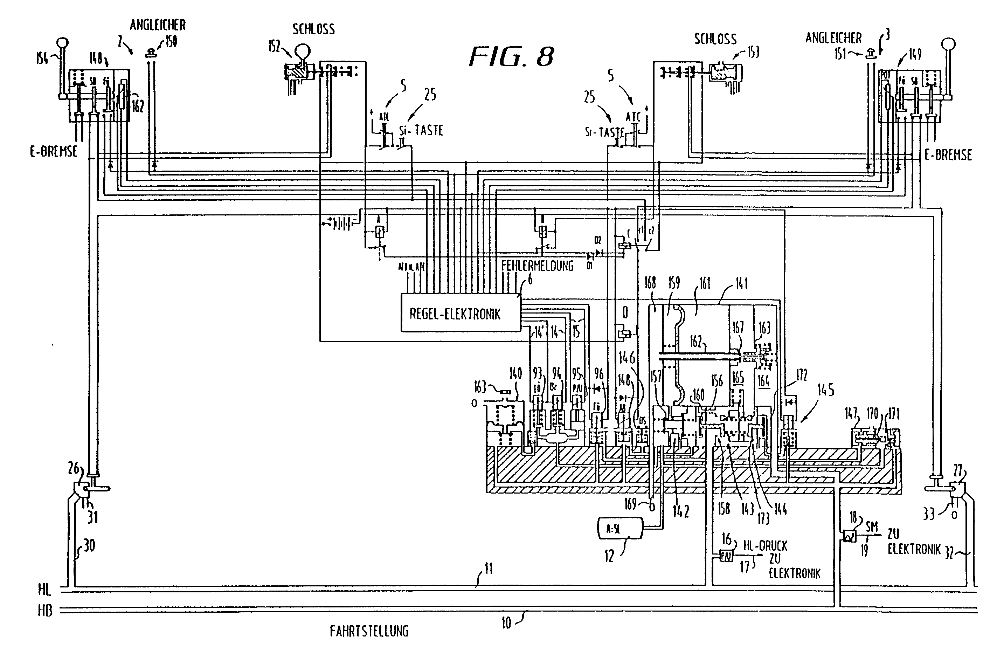

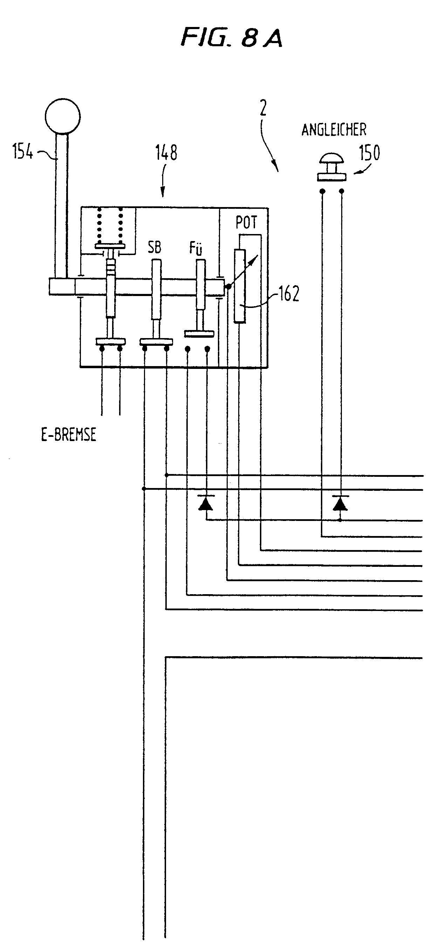

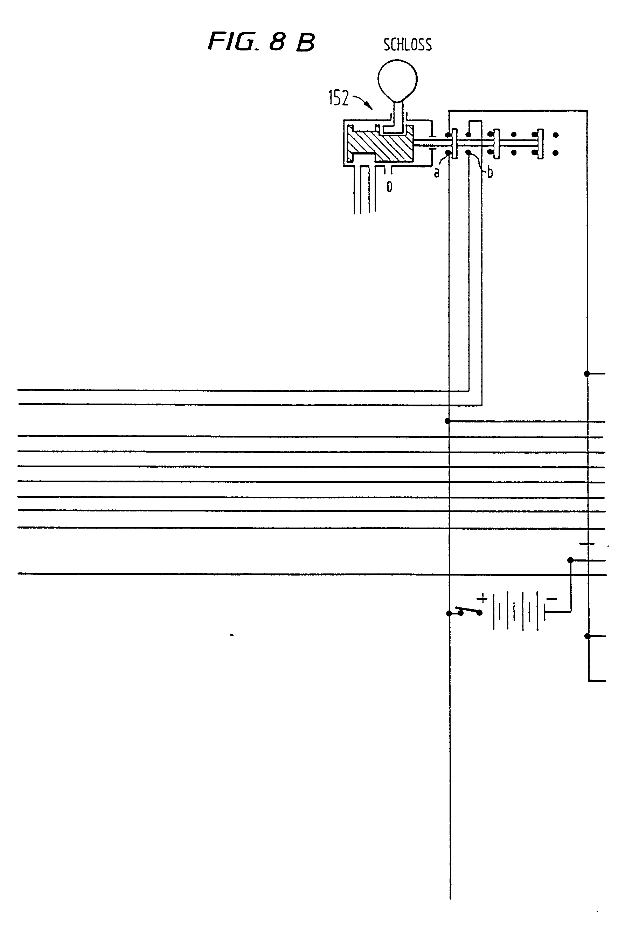

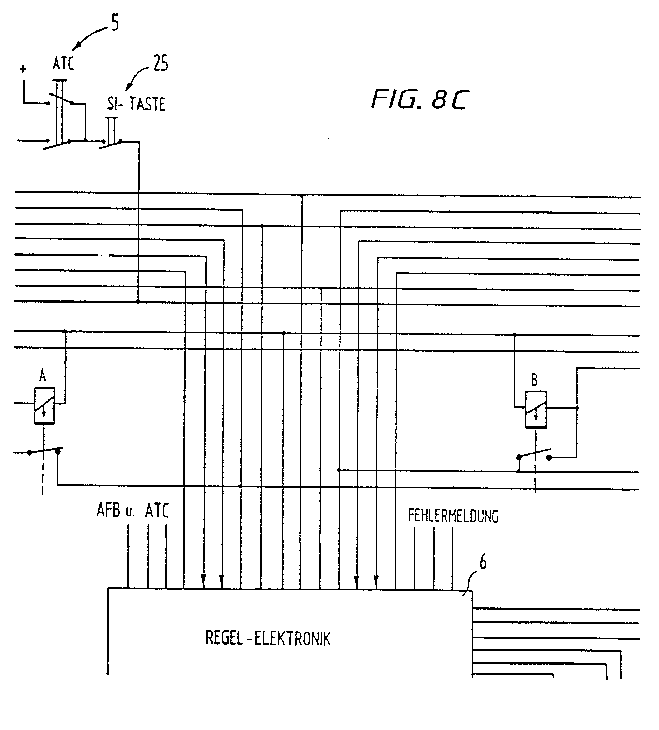

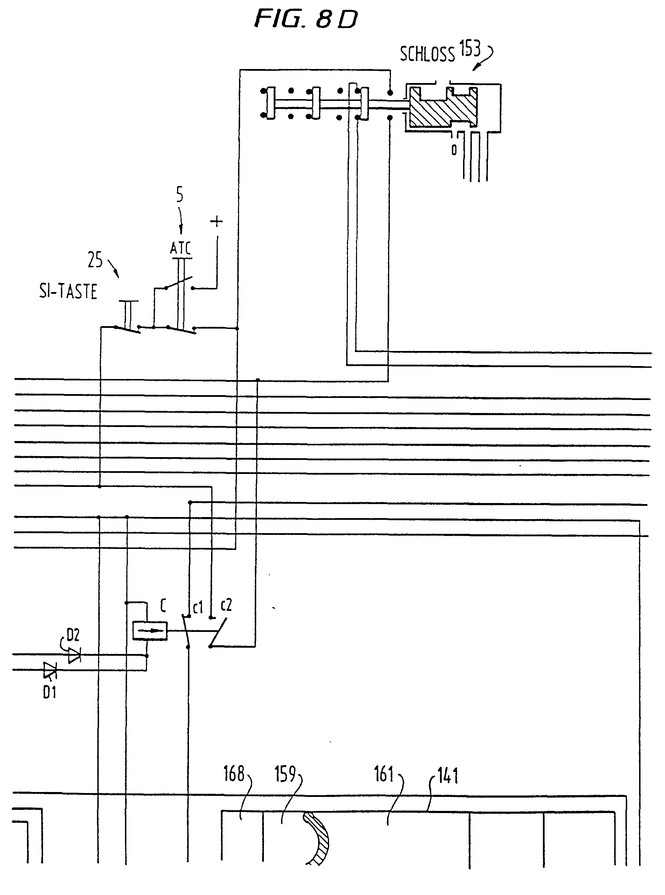

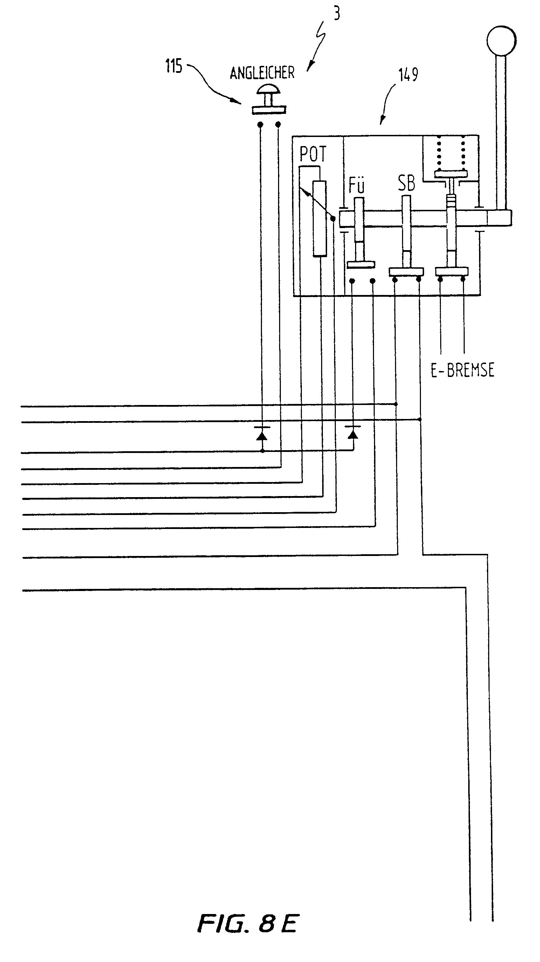

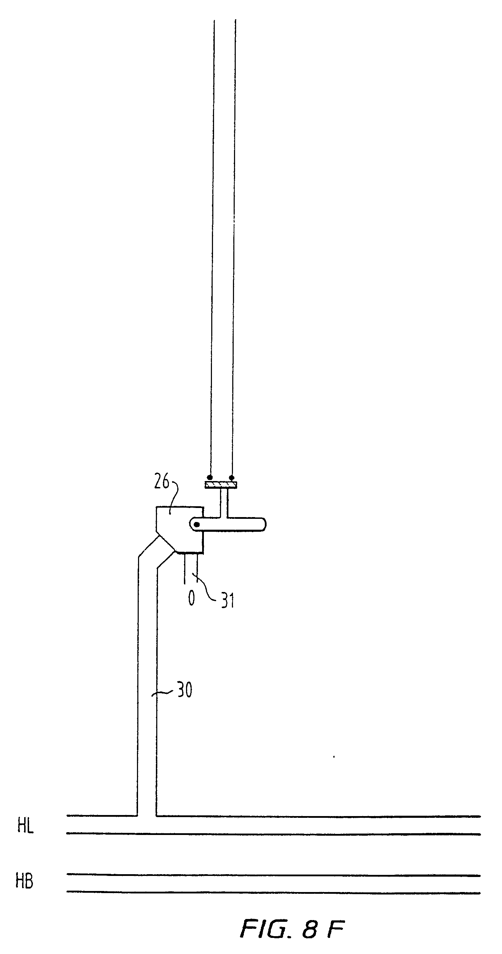

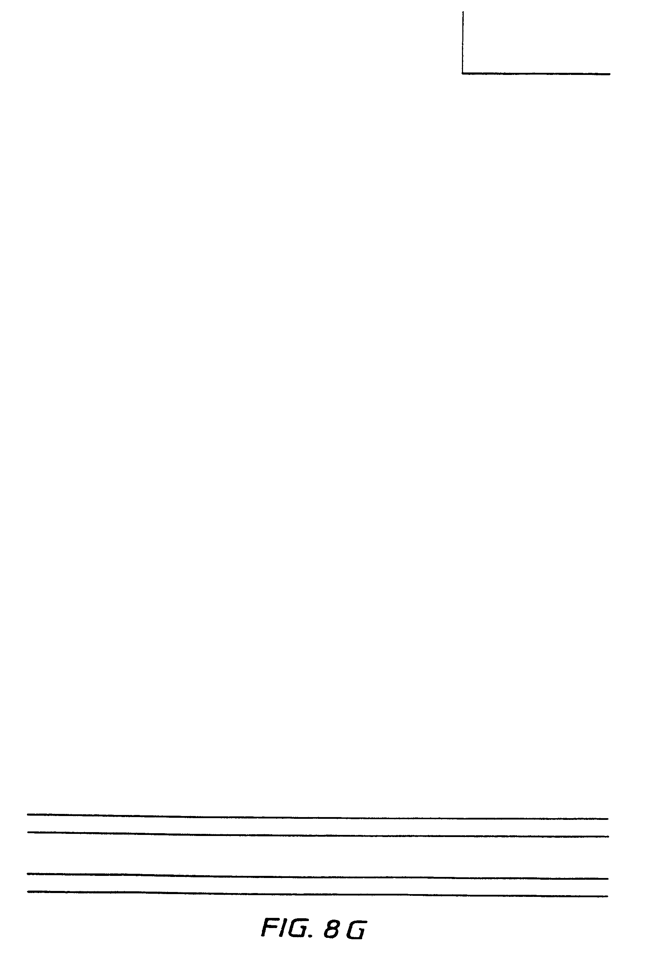

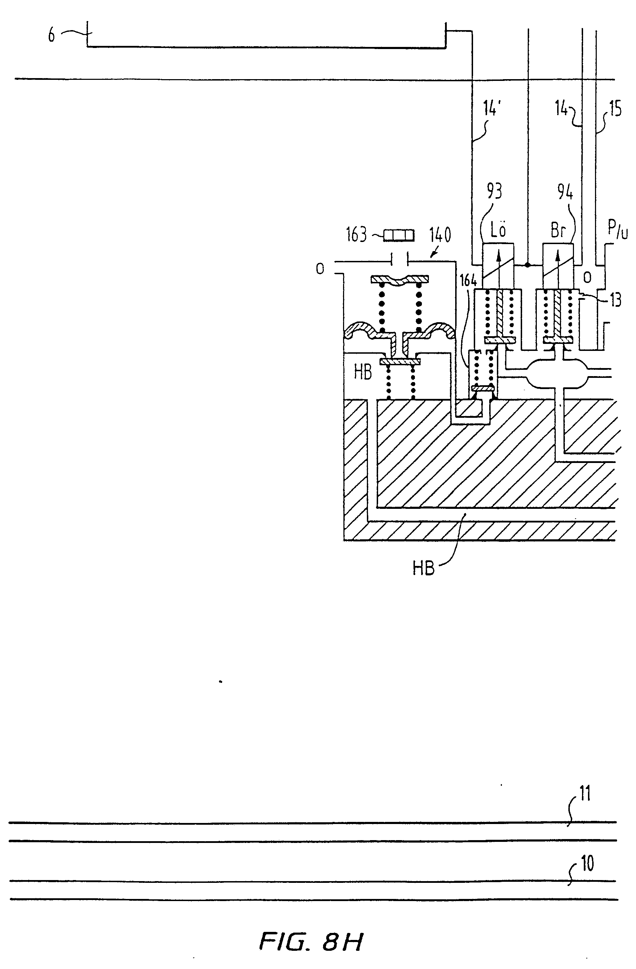

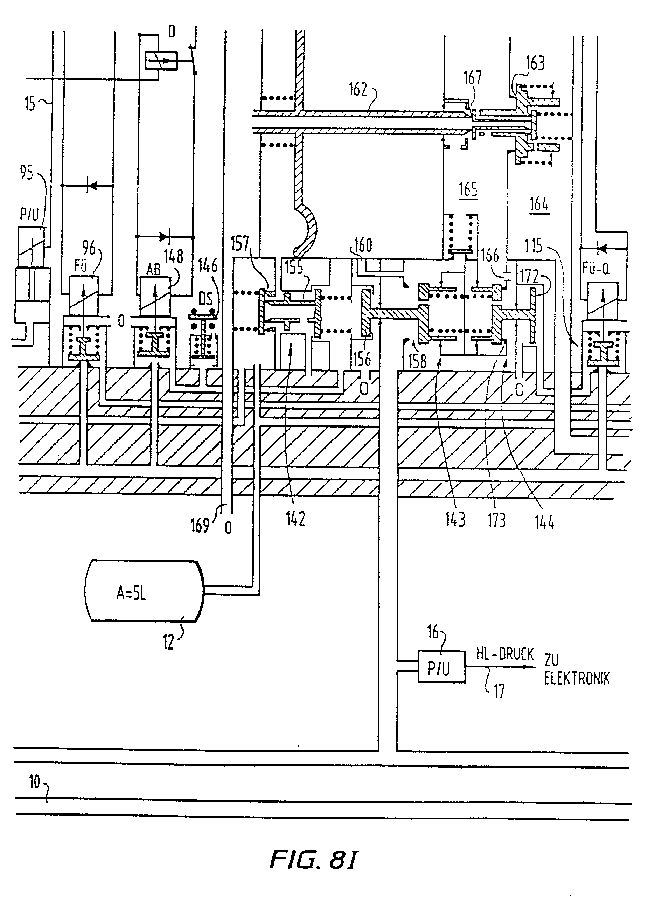

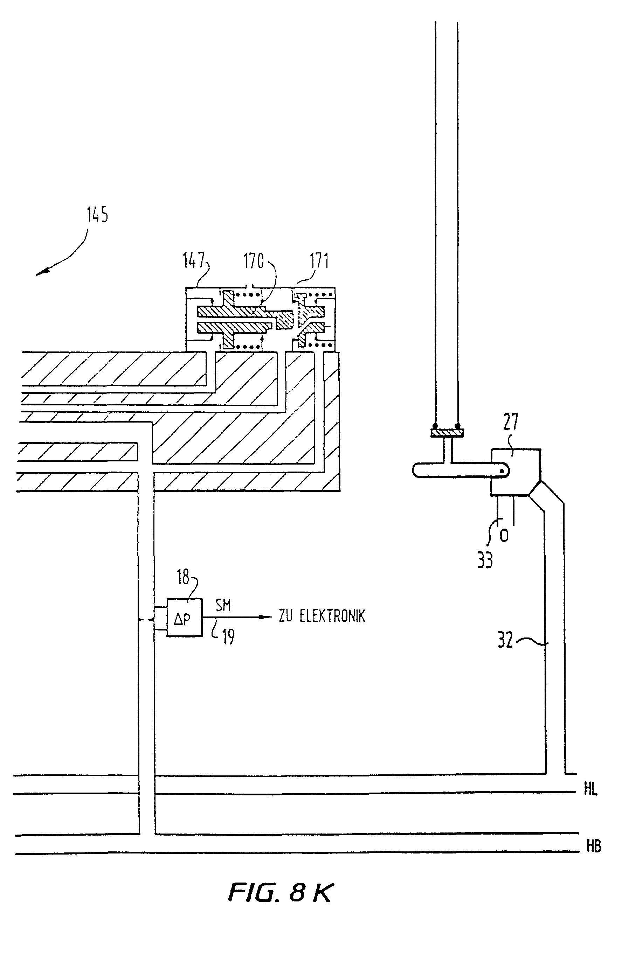

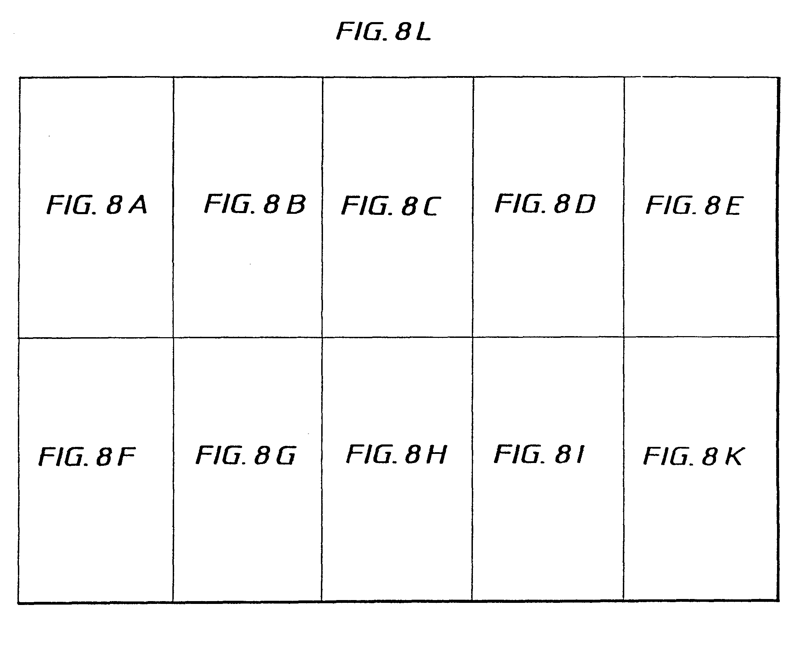

Die eigentliche Logik gemäß Fig. 5C und 5D erhält als Eingangssignale die vier analogen Bremssollwerte von den Führerständen A und B sowie von ATC und AFB (Anschlüsse a13, a14, a15 und a18). Dazu kommen digitale Signale für Unterscheidung der Führerstände (a16, a17), für Füllstoß (a21). Angleicher (a24) und das Vorhandensein des HB-Druckes (a20). Durch Verarbeitung dieser Signale wird im Ergebnis ein Drucksollwert U$_{SOLL}$ (a35) gebildet, der von dem EP-Wandler (Fig. 5E) in den Vorsteuerdruck A umgesetzt wird. Über Relaisausgänge (a9 bzw. a10) werden ein Füllstoßventil und ein Querschnittswechselventil des Relaisventilquerschnittes geschaltet (Fig. 8).

Im Folgenden wird die Bildung des Drucksollwertes U$_{SOLL}$ anhand der Fig. 5C und 5D erläutert. Die analogen Bremssignale (Anschlüsse a13 und a14) werden über gesteuerte (Signale FSA bzw. FSB an a16 bzw. a17) Schalter 59 bzw. 60, von denen jeweils nur einer geschlossen sein kann, einem StromSpannungswandler 61 zugeführt, wo die zwischen 2 und 12 mA liegenden Ausgangssignale der Spannungs-Stromwandler 44 bzw. (Fig. 5A) in das Signal U$_{POT}$ umgewandelt werden. Die Bremsollwerte haben einen Basissignalanteil, damit die Signalübertragung vom Stufenschalter bzw. POTi 40 und 41 zur Elektronik überwacht werden kann. Die positive Zuordnung von Bremskraft zu Signalspannung wurde aus Gründen der Genauigkeit gewählt, da die Toleranz für den Lösedruck geringer ist als bei inverser Signalcharakteristik. Nach Subtraktion des Basissignals in einem Subtrahierer 62 erfolgt eine Maximalwertauswahl aller Bremskraftanforderungssignale in einem Maximalwertauswahlschaltkreis 63. Der andere Eingang dieses Schaltkreises 63 führt den Maximalwert von AFB bzw. ATC (Anschlüsse a18 und a15). Somit liegt am Ausgang des Schaltkreises 63 das maximale Bremskraftanforderungssignal. Das Signal Null entspricht dabei dem gelösten Zustand (HL = 5,0 bar), während das maximale Signal der Vollbremsung (HL = 3,4 bar - 0,2 bar) entspricht.

Durch Hysterese-Schwellwertschalter 64 bzw. 65 für Bremssollwert bzw. AFB, ATC mit den Schwellwerten

$S_{P1}$, $S_{P2}$ bzw. $S_{A2}$ wird ein Ansprungverhalten realisiert. Bei Einsatz eines Stufenschalters (40, 41) entspricht der Ansprungwert der ersten Bremsstufe des Stufenschalters. Damit keine Interferenzen mit der elektronischen Ansprungeinrichtung auftreten, sind die Werte $S_{P1}$ und $S_{P2}$ geringfügig versetzt, so daß die Werte des Stufenschalters dominieren. Die Schwellwerte $S_{A1}$ und $S_{A2}$ bewirken elektronisch ein Ansprungverhalten für das stufenlose ATC- und AFB-Eingangssignal, das dem Ansprungverhalten des Stufenschalters entspricht. Wird der Bremssollwert kontinuierlich, beispielsweise über Potentiometer (40, 41) vorgegeben, so ist der Ansprung durch die Werte $S_{P1}$ und $S_{P2}$ definiert. Durch die Signale $S_P$ oder $S_A$ wird unterhalb der ersten Bremsstufe der Sollwert auf Null gesetzt, so daß durch die nachfolgende Invertierung (Inverter 67) das maximale Signal $U_{Bmax}$ des Lösezustandes vorgegeben wird.

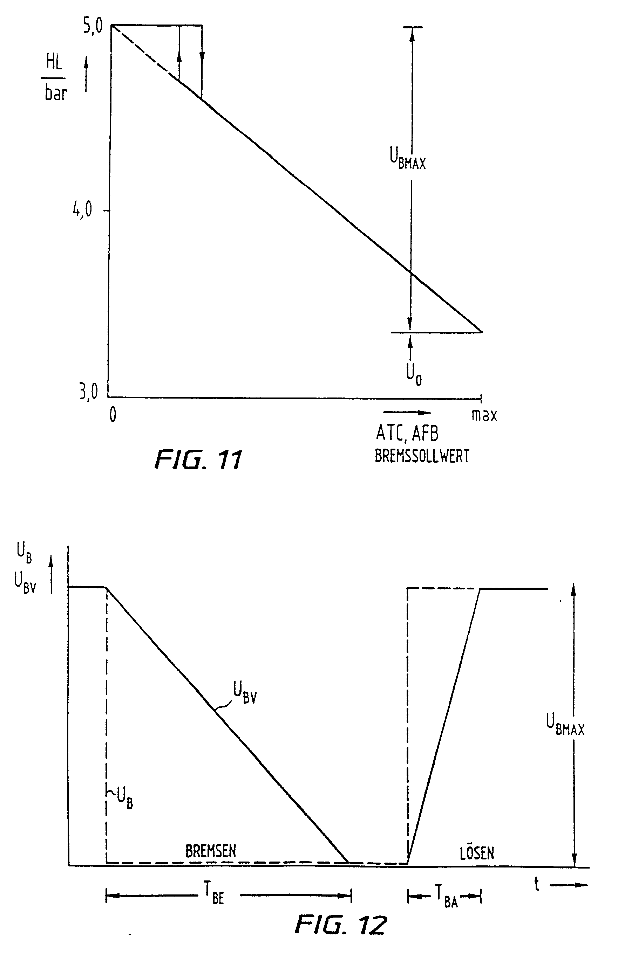

Zur konkreten Realisierung des Ansprungverhaltens wird das Ausgangssignal $U_{POT}$ des Stromspannungswandlers 61 dem Hysterese-Schwellwertschalter 64 zugeführt, während das maximale Signal von AFB bzw. ATC (Anschlüsse a18 und a15) dem Hysterese-Schwellwertschalter 65 zugeführt werden. Die Ausgänge der Schwellwertschalter 64 und 65 werden über ein ODER-Gatter 66 miteinander verknüpft, wobei das Ausgangssignal dieses ODER-Gatters 66 einen steuerbaren Schalter 68 betätigt, der zwischen dem Maximalwertauswahlschaltkreis 63 und dem Inverter 67 liegt. Die Invertierung in dem Inverter 67 erfolgt dadurch, daß das Ausgangssignal des Schaltkreises 63 von einer Spannung $U_{Bmax}$ subtrahiert wird. Die statische Signalcharakteristik, d. h. HL-Druck in Abhängigkeit von dem Bremssollwert $U_B$ am Ausgang des Invertierers 67, ist in Fig. 11 dargestellt. Dieses Signal wird in seinem Anstiegs- bzw. Abfallgradienten in einem Zeitglied ($T_B$) 69 begrenzt, wie sich aus dem Signalverlauf der Fig. 12 ergibt. Besonders wichtig ist hierbei die Bremszeit $T_{BA}$, die nach UIC vorgegeben ist. Das gradientenbegrenzte Signal $U_{BV1}$ wird in einem Multiplizierer 70 mit einem konstanten Faktor $K_B$ normiert bzw. an den Signalbereich angepaßt, da weitere Sollwertanteile von den später erläuterten Angleicher- und Füllstoßfunktion hinzukommen. Das normierte Signal $U_{BV}$ wird einem Summierer 71 zugeführt, wo der endgültige Sollwert $U_{SOLL}$ gemäß folgender Beziehung erzeugt wird

$$U_{SOLL} = U_{BV} + U_O + U_{FÜ} + U_{AG}$$

Die Signale $U_O$ (Basiswert), $U_{FÜ}$ (Sollwert der Füllstoßfunktion) und $U_{AG}$ (Sollwert der Angleicherfunktion) werden später erläutert.

Der Sollwert $U_{SOLL}$ erscheint an dem Anschluß a35 und gelangt von dort zu dem Anschluß a35 der Karte «EP-Wandler» (Fig. 5E), wo er in einen pneumatischen Vorsteuerdruck umgesetzt wird.

Im Folgenden wird die Angleicherfunktion, die ebenfalls voll elektronisch ausgeführt wird, erläutert. Die beim Angleichen auftretende Drucküberhöhung wird elektronisch zum Drucksollwert $U_{SOLL}$ im Summierer 71 addiert und vom EP-Wandler realisiert. Dadurch müssen die sehr langsamen Druckgradienten nicht pneumatisch über Behälter und Düsen erzeugt werden, sondern können sehr viel genauer über elektronische Zeitglieder realisiert werden. Der Angleichervorgang kann manuell oder automatisch durchgeführt werden.

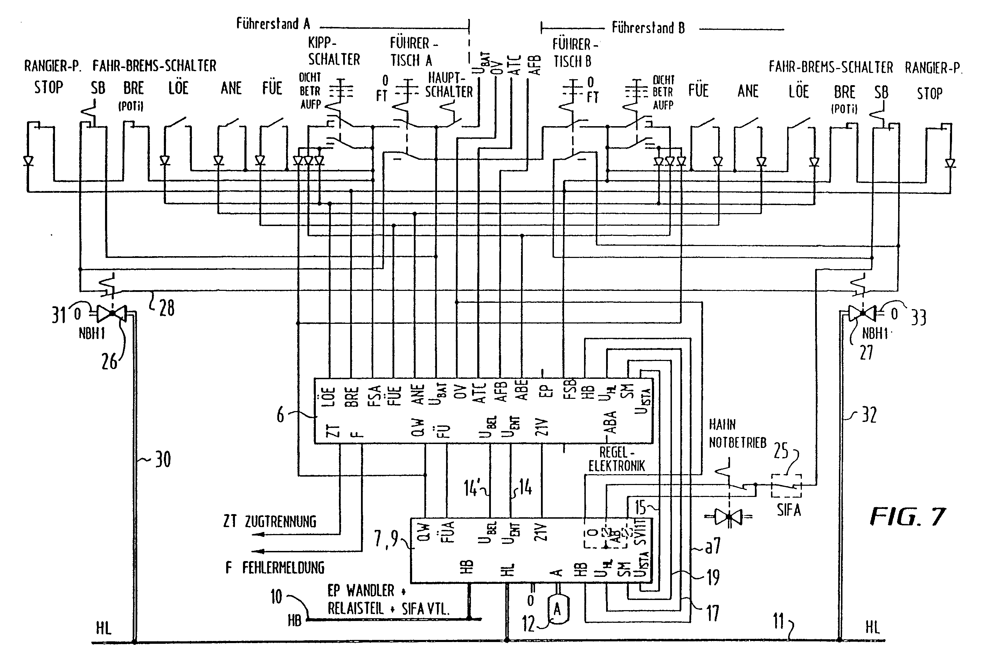

Der manuelle Angleicher kann von beiden Führerständen über einen Kontakt «Angleicher» (ANE der Fig. 7) betätigt werden, so daß Batteriespannung als Steuersignal am Anschluß a11 aufgeschaltet wird. Dieses Signal gelangt nach der galvanischen Trennung 54 an den Anschluß a24 und von dort an ein UND-Gatter 72, dessen anderem invertierenden Eingang das Ausgangssignal des ODER-Gatters 66 (Anschluß a25) zugeführt wird, so daß sichergestellt ist, daß dieses Signal nur in Lösestellung durchgeschaltet wird; d. h., eine Angleicherbetätigung in Bremsstellung ist nicht möglich.

Die Angleicherfunktion ist aus Gründen der Genauigkeit digital realisiert und zwar über einen in seiner Frequenz umschaltbaren Taktgenerator 73, dessen Ausgangssignal in einem nachgeschalteten Vorwärts-Rückwärtszähler 74 und einem Digital/Analog-Wandler 75 ein Signal mit zeitproportionalem Anstieg bzw. Abfall bewirkt, abhängig von der Zählrichtung des Zählers 74. Der Zähler 74 ist so geschaltet, daß ein Überlaufen bei Null und bei seinem Endwert verhindert wird. Bei Angleicherbetätigung läuft der Zähler in einer Zeit von ca. 10 Sekunden hoch. Ohne Angleichersignal läuft der Zähler selbsttätig vom jeweiligen Zählwert auf Null zurück (Zeit: 240 s von maximal bis Null). Der in einen Analogwert (D/A-Wandler 75) umgesetzte Zählerstand wird über einen Multiplizierer 76 mit dem Faktor $k_A$ der maximalen Drucküberhöhung des Angleichvorganges (z. B. 0,5 bar) zugeordnet. Das Ausgangssignal des Multiplizierers 76 erscheint am Anschluß a29 und gelangt von dort an einen Summiereingang des Summierers 71.

Die automatische Angleichfunktion wird aus der Höhe der vorausgegangenen Einbremsung abgeleitet, so daß beim Lösen eine Überhöhung des Lösedruckes erfolgt. Taktgenerator 73 und Zähler 74 werden daher parallel zu einer manuellen Betätigung von einem Signal $U_{B1}$ minus $U_A$ geschaltet. Das Signal $U_{B1}$ wird am Ausgang des Schalters 68 abgegriffen und ist proportional zur Höhe der Einbremsung. Das Signal $U_A$ wird aus dem Ausgang des D/A-Wandlers 75 multipliziert (Multiplizierer 77) mit einem Faktor $K_{AA}$ erzeugt. In einem digitalen Subtrahierer 78 wird die erwähnte Differenz $U_{B1}$ minus $U_A$ erzeugt und über eine ODER-Gatter 79, dessen anderer Eingang mit dem Ausgang des UND-Gatters 72 verbunden ist, den Steuereingängen von Taktgenerator 73 und Zähler 74 zugeführt. Bei einer Einbremsung wird wegen $U_{B1} > U_A$ der Zählerstand erhöht, bis $U_{B1} = U_A$ erreicht ist. Der Angleicherwert $U_{AG}$ wird jedoch im Bremszustand nicht wirksam geschaltet ($U_{AG} = 0$). Hierzu ist zwischen D/A-Wandler 75 und Multiplizierer 76 ein steuerbarer Schalter 80 vorgesehen, der durch das Ausgangssignal des ODER-Gatters 66 (Anschluß a25) betätigt wird.

Beim stufenweisen Lösen verringert sich $U_A$ (Eingang Subtrahierer 78) zeitproportional mit dem vom Taktgenerator 73 vorgegebenen Gradienten. In Lösestellung wird dann der noch vorhandene Angleicherwert $U_{AG}$ durchgeschaltet. Dieser Wert ist somit nicht nur abhängig von der vorangegangenen Bremsstufe, sondern auch von der Art des Stufenlösens.

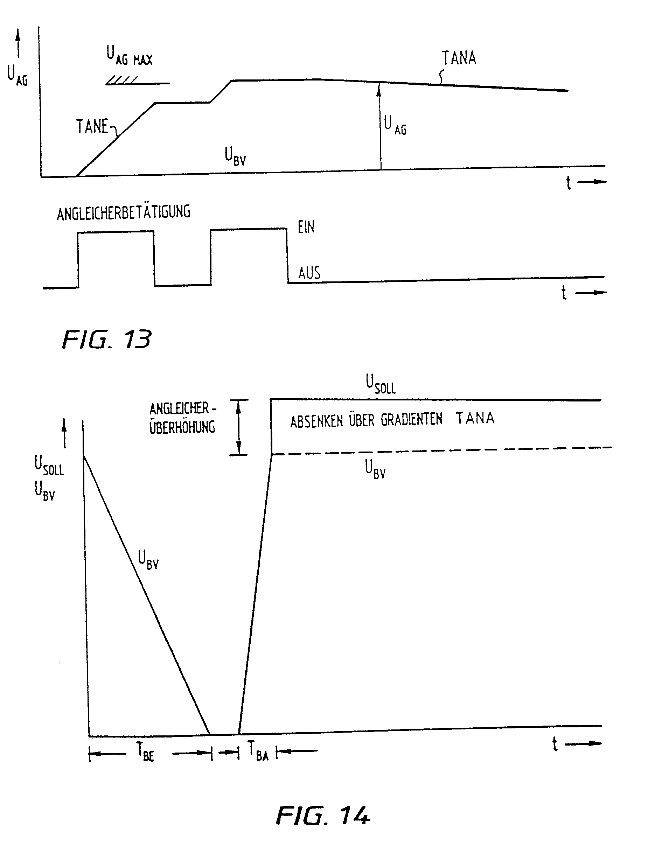

Beim automatischen Angleichen wird nur ein Teil der Erhöhung des manuellen Angleichers vorgegeben, was durch den Faktor $K_{AA}$ (Multiplizierer 77) berücksichtigt ist. Der zeitliche Signalverlauf beim manuellen und automatischen Angleichen ist in den Figuren 13 und 14 dargestellt.

Im Folgenden wird die Füllstoßfunktion erläutert. Der Füllstoß erfolgt manuell durch Aufschalten von Batteriespannung am Anschluß am über einen Taster FÜE (Fig. 7). Der Füllstoßbefehl wird nur dann ausgeführt, wenn nicht gleichzeitig eine ATC-Bremsbefehl vorliegt. Hierzu werden das galvanisch getrennte Füllstoßsignal (Anschluß a21) und das schwellwertüberprüfte ATC-Signal (Anschluß a19) über ein UND-Gatter 81 geleitet. Liegt dagegen ein AFB-Signal vor, so kann es durchaus sinnvoll sein, daß der Triebfahrzeugführer durch Füllstoß eingreift, oder daß die AFB selbst die Füllstoßfunktion benützt.

Mit dem Füllstoßsignal am Ausgang des UND-Gatters 81 wird über den Anschluß a22 gleichzeitig das Füllstoßrelais 55 (Fig. 5B) erregt, wodurch der Schalter 57 geschlossen wird und über ein Signal an dem Anschluß a9 ein Füllstoß-Magnetventil (Fig. 5E) erregt wird. Somit wird mit dem Füllstoßsignal unter Berücksichtigung der Überwachung das Füllstoßrelais 55 erregt; bei einem Fehler im Relais 55 oder der Elektronik wird das Füllstoßventil mit dem Abschalten des Füllstoßsignals entregt und ein Füllstoß verhindert.

Beim Füllstoß wird über das Füllstoßmagnetventil (Fig. 5E) der A-Druck gleich dem HB-Druck gesetzt. Der EP-Wandler wird über ein internes Signal ausgeschaltet, durch Unterbrechen der Ansteuerung für die Brems- und Lösemagnetventile. (Ausgang des UND-Gatters 81, Anschlüsse a34, a30 und Endstufenabschaltung der Treiberschaltung im EP-Wandler für die Brems- und Lösemagnetventile). Dies ist erforderlich, da der Druck-Sollwert $U_{SOLL}$ nicht exakt auf HB-Druck gesetzt werden kann und die Regelung sonst gegen den HB-Druck arbeiten würde.

Es sei darauf hingewiesen, daß das Füllstoßmagnetventil 96 auch fortgelassen werden kann. In diesem Falle muß der Speisedruck zu dem A-Druckbehälter 12 erhöht werden und bei ca. 10 bar liegen.

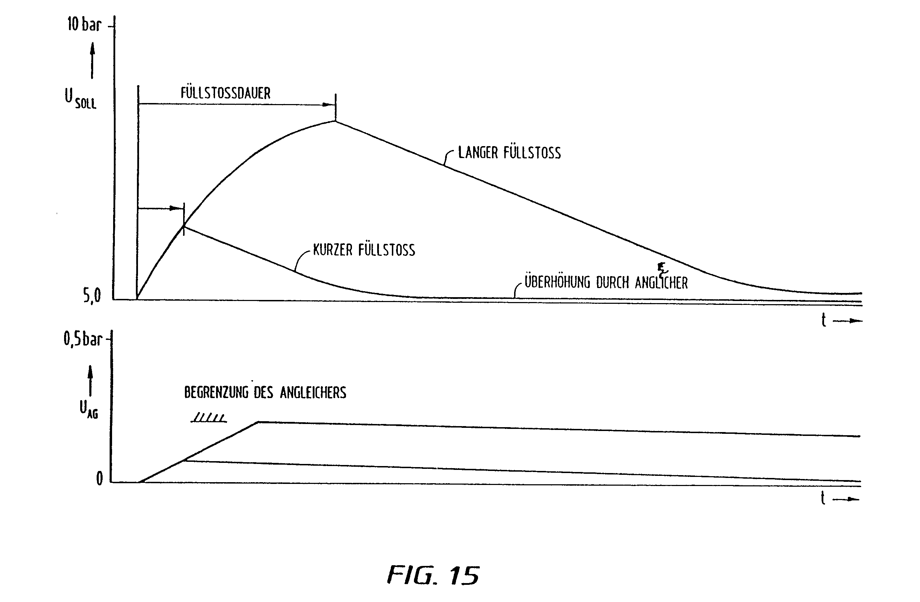

Über das Füllstoßmagnetventil ist eine sehr schnelle Erhöhung des A-Drucks am Relaisventil möglich, schneller als es der EP-Wandler zuläßt. Nach Füllstoßbetätigung hingegen ist ein definierter, verzögerter Abfall des A-Drucks wünschenswert, der optimal durch den EP-Wandler realisiert werden kann. Dazu wird der Drucksollwert $U_{SOLL}$ durch Addition von $U_{FO}$ (Anschluß a28) am Summierer 71 beim Füllstoß auf den niedrigsten HB-Wert (8 bar) gebracht. Dies geschieht durch Aufschalten eines vorgegebenen Wertes $U_Q$ in einem steuerbaren Schalter 82, dessen Steuereingang mit dem Ausgang des UND-Gatters 81 verbunden ist. Der Wert $U_Q$ wird über ein Verzögerungsglied 83 mit der Zeitkonstante $E_{FE}$ durchgeführt. Dieses Verzögerungsglied 83 ist nur in Aufwärtsrichtung wirksam und simuliert die pneumatische Verzögerung des A-Behälters beim Druckaufbau, so daß $U_{SOLL}$ beim Anstieg dem Druck der A-Kammer nicht vorauseilt. Das Ausgangssignal $U_{FO}$ des Verzögerungsgliedes 83 erscheint am Anschluß a28. Dies hat Bedeutung am Ende der Füllstoßbetätigung, da der verzögerte Abbau der Drucküberhöhung vom Werte des dann vorhandenen Bremssollwertes $U_{SOLL}$ ausgehend erfolgt. Das zeitliche Verhalten des Druckabbaus ist in Fig. 15 für kurze und lange Füllstoßbetätigung dargestellt. Bei langem Füllstoß erreicht $U_{SOLL}$ den Maximalwert (8 bar) und wird zeitlinear mit einem Gradienten $T_{FA}$ (z. B. 1,5 bar/4S) abgebaut bis zu einem Wert von 5,5 bar. Dies erfolgt über ein Zeitglied 84, das parallel zu dem Zeitglied 83 geschaltet ist und nur beim Abbau wirksam ist. Der nachfolgende Übergang auf dem mit dem Füllstoß gekoppelten Angleicherwert entspricht einer e-Funktion. Die Zeitverzögerung von 5,5 bar nach 5,3 bar liegt bei 5 Sekunden. Alle diese Wertangaben beziehen sich auf einen Lösedruck von 5,0 bar.

Mit dem Füllstoß erfolgt eine automatische Angleicherbetätigung. Hierzu wird das Ausgangssignal des UND-Gatters 81 dem Steuereingang eines steuerbaren Umschalters 85 zugeführt, an dessen Ausgang ein vorgegebener Wert $U_{B2}$ erscheint, der dem positiven Eingang des digitalen Summierers 78 zugeführt wird. Der Gradient der Drucküberhöhung entspricht dem allgemeinen Druckangleichervorgang. Der Maximalwert wird allerdings unabhängig hiervon durch die Höhe des Wertes $U_{b2}$ vorgegeben.

Bei kurzen Füllstößen bleibt $U_{SOLL}$ wegen des Verzögerungsgliedes 83 weit unterhalb des HB-Druckes, so daß der A-Druck am Füllstoßende sehr schnell auf den niedrigen Sollwert absinkt und von dort den in Fig. 15 vorgegebenen Verlauf fortsetzt. Die Angleicherüberhöhung ist bei kurzem Füllstoß entsprechend niedriger.

Das Abklingen des A-Druckes nach erfolgtem Füllstoß wird überwacht. Dazu wird die Zeit vom Ende der Füllstoßbetätigung (Verschwinden des Ausgangssignales des UND-Gatters 81) in einem Zeitglied 86 mit einer vorgegebenen Zeitschwelle $T_{FU}$ verglichen. Wenn der A-Druck in dieser Zeit von z. B. 8 bar nicht bis auf 5,65 bar abgesunken ist, erfolgt Fehlermeldung $F_{FU}$ was über ein Verstärker 87 auf einer Anzeige 88 angezeigt wird. Zwischen den Ausgang des UND-Gatters 81 und das Zeitglied 86 ist ein ODER-Glied 86′ eingeordnet, dessen zweiter Eingang mit dem Ausgang eines nachfolgend zu beschreibenden Schwellwertschalters 90 verbunden ist.

Mit dem Füllstoßsignal wird der wirksame Nachspeise-Querschnitt des Relaisventiles 9 über ein Querschnittwechsel-Magnetventil (Fig. 5E, Anschluß a10) vergrößert. Dazu wird das Füllstoßsignal (Ausgang des UND-Gatters 81) über den Setzeingang eines Flip-Flops 89 auf den Anschluß a23 geschaltet und erregt das Querschnittwechsel-Relais 56 (Fig. 5B), wodurch der Schalter 58 Batteriespannung $U_{BAT}$ auf den Anschluß a10 gibt, wodurch das Querschnittswechsel-Magnetventil (Fig. 5E) erregt wird. Dieser Querschnittswechsel bleibt über das Füllstoßsignal hinaus bestehen, bis der A-Druck von dem Druck-Spannungswandler (Signal auf Leitung 15; Anschluß a37) einen Schwellwert $U_R$ eines Schwellwertschalters 90 unterschreitet, wobei letzterer das Flip-Flop 89 zurücksetzt (Reset-Eingang). Der Schwellwert $U_R$ kann hierbei beispielsweise 5,65 bar betragen.

Um Toleranzen verschiedener Bauelemente (z. B. Druckaufnehmer, Stufenschalter) ausgleichen zu können, besteht die Möglichkeit, den Lösedruck um ± 0,3 bar zu korrigieren. Hierzu erzeugt ein Potentiometer 91 (Fig. 5C) einen Lösedruck-Korrekturwert $\Delta U_O$, der nach Addition (Addierer 92) mit einem Basiswert $U_O$ einerseits dem

Summierer 71 zugeführt wird und andererseits über den Anschluß a27 den Schwellwert U$_R$ des Schwellwertschalters 90 korrigiert. Alle Druckschwellwerte, die in der Elektronik verarbeitet werden, verändern sich automatisch mit dieser Korrektur.

Der EP-Wandler gemäß Fig. 5E besteht aus einem Elektronikteil mit einer Regellogik und einem Ventilträger, wie durch die gestrichelten Linien der Fig. 5E angedeutet. Der Ventilträger enthält das Relaisventil 9 (einschließlich Querschnittswechsel-Ventil) sowie ein Einlaß-Magnetventil 93 und ein Auslaß-Magnetventil 94, die beide an die A-Druckleitung 8 angeschlossen sind. Der Einlaß des Magnetventiles 93 ist aus einer geregelten Druckluftquelle mit einer den Lösedruck in der Hauptluftleitung 11 übersteigender Druckhöhe gespeist, beispielsweise aus einem aus Fig. 8 ersichtlichen, auf z. B- 6 bar eingestellten Druckminderventil 140, während der Auslaß 13 des Magnetventils 94 mit Atmosphärendruck verbunden ist. Über einen Druck-Spannungswandler 95 wird der A-Druck gemessen und als Istwert-Signal U$_{ist}$ auf die Leitung 15 ausgegeben. Das oben bereits erwähnte Füllstoß-Magnetventil 96 verbindet die HB-Leitung 10 mit der A-Druckleitung 8. In der HL-Leitung 11. d. h. am Ausgang des Relaisventils 9, ist der Druck-Spannungswandler 16 angeordnet, der den HL-Druck mißt und auf der Leitung 17 als Spannungswert ausgibt. In der HB-Leitung 10 ist der Durchflußmengenmesser 18 angeordnet, der hier als Differenzdruckmesser ausgebildet ist, der den Differenzdruck zwischen zwei Seiten einer in der HB-Leitung 10 angeordneten Blende mißt und diesen Differenzdruck als proportionalen Spannungswert auf die Leitung 19 ausgibt.

Die Elektronik des EP-Wandlers ist als geschlossener Regelkreis ausgebildet, wodurch eine extreme Linearität und Genauigkeit der EP-Wandlung (U$_{SOLL}$ zu A-Druck) erreicht wird. Hysterese ist im Vorsteuerkreis nicht vorhanden. Aus Gründen der Stabilität der Druckregelung wird hier nicht der HL-Druck, sondern der Vorsteuerdruck geregelt, so daß insgesamt die Hysterese des Relaisventils 9 wirksam bleibt. Für die Stabilität der Regelung ist ein Minimalvolumen notwendig, das durch Leitungsvolumen und Volumen des Relaisventils 9 erbracht wird. Der dieses Volumen vergrößernde A-Behälter 12 kann somit theoretisch entfallen. Eine Volumenvergrößerung hat keinen Einfluß auf die Druckgradienten, da dieser ja elektronisch vorgegeben sind. Es wird allerdings damit trotzdem eine zusätzliche «Beruhigung» der Regelung erreicht. Trotz Einsatz von schaltenden Magnetventilen wird ein (nahezu) stetiges und exaktes Regelverhalten erreicht, da die Magnetventile so angesteuert werden, daß auch Teilöffnungen der Ventile möglich sind.

Das Sollwertsignal U$_{SOLL}$ (Anschluß a35) gelangt zu einem Regler 97, dessen anderem Eingang der HL-Druck-Meßwert über die Leitung 17 zugeführt wird. Das Ausgangssignal des Reglers 97 und der Wert U$_{SOLL}$ (Anschluß a38) werden in einem Summierer 98 addiert und dann einem Vergleicher 99 zugeführt, wo ein Vergleich zwischen dem Ausgangssignal des Summierers 98 und dem Istwert-Signal des A-Druckes stattfindet. Das Ausgangssignal des Druck-Spannungswandlers 95 wird in einem Multiplizierer 100 noch mit einem Faktor K$_P$ multipliziert, bevor es dem Vergleicher 99 zugeführt wird. Das Ausgangssignal des Vergleichers 99 wird einem Regler 101 zugeführt, dessen Ausgang über Vorzeichen-Detektoren 102 bzw. 103 und abschaltbare Verstärker 104 bzw. 105 (Anschluß a30) die Magnetventile 93 bzw. 94 je nach Vorzeichen der Regelabweichung betätigt, wodurch der A-Druck erhöht (Magnetventil 93) oder abgesenkt (Magnetventil 94) wird.

Der EP-Wandler wird überwacht durch Auswertung der Regelabweichung (Eingang des Reglers 101) mittels eines Fensterdiskriminators 106. Über- oder unterschreitet die Regelabweichung vorgegebene Schwellwerte, so erfolgt eine Fehlermeldung F$_{RABW}$. Diese Fehlermeldung erscheint nur dann (UND-Gatter 107), wenn am Anschluß a36 ein Signal für vorhandenen AB-Druck ansteht (vgl. Signal an a7, galvanische Trennung 52, Anschluß a20, ODER-Gatter 108 (Fig. 5D), Anschluß a36). Über das ODER-Gatter 108 wird auch sichergestellt, daß bei Füllstoß (Ausgang UND-Gatter 81) die Fehlerüberwachung abgeschaltet ist. Diese Maßnahmen sind deshalb erforderlich, damit bei Aufrüstung des Fahrzeuges (ungenügender HB-Druck) keine Fehlermeldung und Fehlerspeicherung erfolgt. Da sich bei fehlendem HB-Druck eine Regelabweichung ergibt, wird, abhängig von der Stellung des HB-Druckschalters. die Fehlerüberwachung außer Kraft gesetzt. Das Fehlersignal F$_{RABW}$ wird über einen Verstärker 109 auf eine Anzeige 110 sichtbar gemacht. Durch die Fehleranzeige werden Ausfälle der Drucksensoren, der Magnetventile, der Endstufen und der Regler erfaßt. Da der Verstärker 109 invertiert, wird eine Fehlermeldung durch Erlöschen der Anzeige 110 gemeldet.

Die zur Bildung des Druck-Sollwertes U$_{SOLL}$ führende Signalverarbeitung wird ebenfalls durch mehrere Maßnahmen überwacht. Diese Überwachungen sollen insbesondere ein unbeabsichtigtes Lösen der Bremse verhindern. Diese Funktionen werden im Folgenden erläutert. Zunächst besitzt die Karte «Stromversorgung» der Fig. 5F, die ein Netzteil 111 das aus der Batterie U$_{BAT}$ gespeist wird, aufweist, eine Fehlerüberwachung 112 für die einzelnen Versorgungsspannungen. Hierzu sind Schwellwertschalter vorgesehen, die bei Spannungsabweichungen Fehlersignale F$_{U1}$, F$_{U2}$ bzw. F$_{Uges}$ erzeugen. Hierdurch wird auch die geregelte Versorgungsspannung für die Stufenschalter bzw. Potentiometer 40 und 41 überwacht. Bei Unterschreitung eines Wertes erfolgt Fehlermeldung; für F$_{Uges}$ ist hierzu ein negierender Verstärker und eine Anzeigelampe dargestellt.

Durch Überwachung des Basisanteils des Brems-Sollwertes U$_{POT}$ (Ausgang Strom-Spannungswandler 61) in einem Schwellwertschalter 113 kann ein Ausfall des Bremsanforderungssignales durch Fehler im Stufenschalter bzw. im Potentiometer erkannt werden. Dieser Ausfall führt zu einer Fehlermeldung F$_{BAS}$, die allerdings nicht zu einer automatischen Einbremsung führt.

Über die Fehlermeldungen F$_{DIFP}$ und F$_{DIFA}$ werden nachgeordnete Signalverarbeitungskomponenten, wie z. B. das Zeitglied 69 überwacht. In einem Vergleicher 114 wird eine Differenz zwischen der bremsanforderung U$_{POT}$ (Stromspannungswandler 61) und dem Wert U$_{BV1}$ (Zeitglied 69) gebildet, die jeweils möglichst am Anfang und Ende der Signalverarbeitung abgegriffen wird. Die Überwachung soll hierbei erkennen, ob das nachgeordnete Signal fehlerhaft in Richtung Lösen abweicht. Bei der Überwachung wird unterschieden, ob der Sollwert unterhalb oder oberhalb der ersten Bremsstufe liegt, zur Unterscheidung zwischen Bremsen und Lösen. Die Anspruchschwelle der Überwachung ist im Bremsbereich geringer (z. B. 0.15 bar) als im Lösebereich (z. B. 0,55 bar), da im Lösebereich Differenzen durch den Übergang auf die erste Bremsstufe größer sind. Hierzu ist der Vergleicher 114 durch das Ausgangssignal des ODER-Gatters 66 in seinem Schwellwert umschaltbar. Bei der Fehlermeldung $F_{DIFP}$ wird der Brems-Sollwert als Vergleichssignal verwendet; bei der Fehlermeldung $F_{DIFA}$ (Vergleicher 115) dagegen das AFB- bzw. ATC-Signal (Anschluß a18), das mit dem Signal $U_{BV1}$ (Zeitglied 69) verglichen wird. Auch hier folgt eine Umschaltung des Schwellwertes durch das Ausgangssignal des ODER-Gatters 66.

Zur Überwachung der Stufenschalter- bzw. Potentiometer-Versorgungsspannung ist noch ein Bezugselement 116 vorgesehen, dessen Spannung in einem Überwachungsglied 117 überwacht wird, welches das Fehlersignal $F_{REF}$ erzeugt. Die Fehlersignale $F_{REF}$, $F_{BAS}$, $F_{DIFP}$ und $F_{DIFA}$ werden zusätzlich über ein ODER-Gatter 118 und einen Invertierverstärker 119 geführt und für die Funktionsanzeige 120 verwendet, die bei Auftreten eines dieser Fehler erlischt.

Die Überwachung des Füllstoßes (Fehlersignal $F_{FÜ}$ (Zeitglied 86) wurde bereits oben erläutert.

Sämtliche der erwähnten Fehlersignal der Figuren 5C und 5D werden über ein ODER-Gatter 121 und ein Zeitglied 122 über den Anschluß a31 zu der Karte EP-Wandler gemeldet und schalten dort ein Fahlermelderelais 123 und damit dessen Schaltkontakt 124, der eine Fehlermeldung auslöst.

Zusätzlich werden sämtliche Fehlersignale einem Fehlerspeicher 125 (Fig. 5G) jeweils über Zeitglieder 126 zugeführt. Dort werden Fehlermeldungen gespeichert und auf zugeordneten Fehleranzeigen angezeigt. Der Fehlerspeicher gemäß Fig. 5G hat zusätzlich einen Taster 127 für einen Lampentest sowie eine Löschtaste 128. Im Gegensatz zu den Anzeigen 88, 110 und 120, die bei ungestörtem Betrieb leuchten und bei Fehler erlöschen, arbeiten die Fehleranzeigen der Fig. 5G in positiver Logik, d. h. sie leuchten beim Auftreten eines Fehlers.

Durch die Zeitglieder 126 wird sichergestellt, daß Fehler nur dann angezeigt und gespeichert werden, wenn sie länger als eine vorgegebene Zeitdauer (z. B. 3 sec) vorgelegen haben. Durch Ausfall der Versorgungsspannung und/oder Herausziehen der Karte «Fehlerspeicher» wird die gespeicherte Information nicht gelöscht. Das Löschen erfolgt lediglich über die Löschtaste 128.

Auf der Karte «Sollwertbildung» (Fig. 5C) ist noch eine Einschaltverzögerung 129 für die Endstufenabschaltung (Verstärker 104 und 105) vorgesehen, die bei Einschaltung der Versorgungsspannung über ein Schwellwertglied 130 und ein UND-Gatter 131 ein Signal an die Verstärker 104 und 105 der Endstufenabschaltung gibt. Dem anderen Eingang des UND-Gatters 131 wird über dem Anschluß a34 das Füllstoßsignal des UND-Gatters 81 zugeführt, wie oben beschrieben.

Fig. 7 zeigt detaillierter die Verschaltung der Eingabegeräte mit der Elektronik 6. Die Abkürzungen bedeuten:

SB:     Schnellbremsung
BRE:    Bremsen
LÖE:    Lösen
ANE:    Angleicher
FÜE:    Füllen
DICHT:  Dichtheitsprüfung
BETR:   Betriebsstellung
AUFP:   Aufpumpen
$U_{BAT}$: Batterie-Spannung
ATC:    Automatische Zugsteuerung (automatic train control)
AFB:    Automatische Fahr- und Bremssteuerung
FT:     Führertisch eingeschaltet
$U_{BAT}$: Stromversorgung (Batteriespannung)
OV:     Bezugsspannung 0 V

Die Eingänge an der Elektronik 6 haben - soweit sie mit obiger Aufstellung übereinstimmen - die gleiche Bedeutung. Zusätzlich sind dort folgende Eingänge vorgesehen

FSA:    Führerstand A
FSB:    Führerstand B
HB:     HB-Druckschalter
$U_{HL}$: Hauptluftleitungsdruck
SM:     Strömungssmesser (18)
$U_{ISTA}$: A-Druck
ABE:    Betriebsbereitschaftssignal (vom Kippschalter)

Die bei den Ausgangsanschlüssen der Elektronik 6 verwendeten Bezeichnungen bedeuten;

ZT:     Zugtrennung
F:      Fehlermeldung
QW:     Querschnittswechsel (Querschnittswechselventil am Relaisventil 9)
FÜ:     Füllstoßsignal

U$_{BEL}$:     Ansteuersignal für Belüftungsventil 93
U$_{ENT}$:     Ansteuersignal für Entlüftungsventil 94
21V:     Stromversorgung mit 21V

Soweit Leitungen in Fig. 5E mit einem Bezugszeichen versehen sind, wurde dieses Bezugszeichen auch bei Fig. 7 angegeben. Ebenso sind die Notbremshähne 26 und 27 und der Sifataster 25 gemäß Fig. 4 gezeigt.

Angedeutet ist auch ein Hahn für einen Notbetrieb mit den Absperrventilen «AB» analog den Absperrventilen 34 und 35 der Fig. 4.

Soweit Taster für die Eingabeeinheiten dargestellt sind, ist ihre Funktion aus der oben angegebenen Bezeichnung und der Erläuterung der Fig. 5 ohne weiteres verständlich. Auch ist ersichtlich, daß die einzelnen Taster erst dann Signale erzeugen können, wenn sie über den Hauptschalter und die Stellung FT eines Schlosses des jeweiligen Führer standes (Bezeichnung «Führertisch A» bzw. «Führertisch» B in Fig. 7) sowie die Stellung «BETR» des Kippschalters im jeweiligen Führerstand mit Batteriespannung U$_{BAT}$ verbunden sind. Die an einzelnen Tastern dargestellten Dioden dienen als Entkopplungsdioden.

Für die Erzeugung des Bremssignales «BRE» kann - wie in Fig. 7 dargestellt - ein Taster vorgesehen sein, wobei das Bremsanforderungssignal entsprechend der Zeitdauer der Tasterbetätigung ansteigt. Natürlich können hier auch Potentiometer oder Stufenschalter 40 bzw. 41 gemäß Fig. 5A verwendet werden. Als Sonderoption, die von manchen Bahnverwaltungen verlangt wird, liegt der Taster «BRE» in einer Stromschleife mit einem Schalter, der hier mit «Stopp» bezeichnet ist und primär für Rangierbetrieb verwendet wird.

Aus Fig. 7 ist erkennbar, daß die Notbremsschleife (U$_{BAT}$, Hauptschalter, beide Schnellbremsschalter SB und Taster der Notbremshähne 26 bzw. 27, Leitungen 28) als Ruhestromschleife ausgebildet ist, die unabhängig von der Elektronik 6 arbeitet. Wird diese Ruhestromschleife an irgendeiner Stelle unterbrochen, so wird die Hauptluftleitung 11 über die Notbremshähne 26 oder 27 entlüftet und gleichzeitig werden über den Sifa 25 die Absperrventile AB geschlossen. Die übrigen Signalwege der Fig. 7 sind aus dem Schaltbild ohne weiteres ersichtlich, so daß keine detailliertere Erläuterung erforderlich ist.

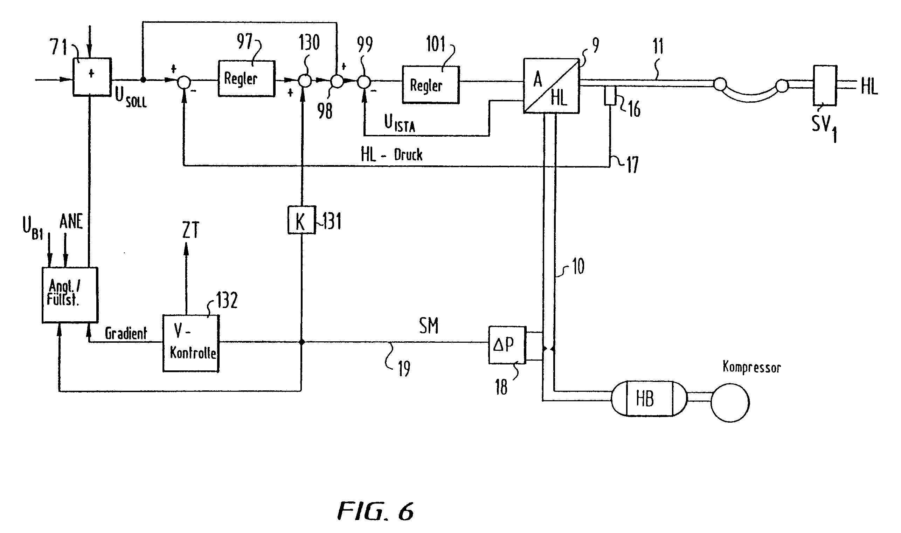

Fig. 6 zeigt eine Modifikation der Regelelektronik und insbesondere wie die Signale für HL-Druck und Strömungsmesser in der HB-Leitung verarbeitet werden. Gleiche Bezugszeichen wie in Fig. 5 bezeichnen gleiche Teile. Es werden daher nur die Unterschiede gegenüber Fig. 5 erläutert. Zwischen den Regler 97 und den Summierer 98 ist noch ein weitere Summierer 130 geschaltet, in welchem das Ausgangssignal des Strömungssensors 18, das auf der Leitung vorliegt, mit einem Faktor k multipliziert (Multiplizierer 131) zu dem Ausgangssignal des Reglers 97 addiert wird. Weiterhin wird in einem Schaltkreis 132 die Änderungsgeschwindigkeit der Strömung in der HB-Leitung überwacht und an die Karte «Angleicher/Füllstoß» (Fig. 5D) gemeldet. Ebenso wird der aktuelle Ist-Wert des Ausgangssignales des Strömungssensors 18 an diese Karte gemeldet. Ein Ausgangssignal dieser Karte wird dann zusätzlich in den Summierer 71 eingespeist.

Wesentliches Ziel dieser Maßnahmen ist es, die Lösezeit zu verkürzen. Hierzu wird in gewissem Umfange der HL-Druck auf den Lösedruck am ersten Steuerventil (des ersten Anhängerwagens) geregelt. Hierzu dient der Druckaufnehmer 16.

Aus diesen Gründen wird zusätzlich der Strömungsmesser verwendet. Die Druckdifferenz am Strömungsmesser $\Delta P$ steht im festen Verhältnis zu der Druckdifferenz in der HL-Leitung 11 zwischen der HL-Druckmeßstelle 16 und dem ersten Steuerventil $\Delta P_{HL}$. Es gilt:

$$\Delta P_{HL} = c \cdot \Delta P,$$

wobei c ein konstanter Faktor ist. Es braucht daher nicht der Durchsatz am Strömungsmesser in 1/min gemessen zu werden; vielmehr genügt die Verarbeitung der Druckdifferenz. Addiert man $\Delta P_{HL}$ zusätzlich zum A-Druck (Addierer 130 und 99), so kann man sicher sein, daß der HL-Druck am ersten Steuerventil innerhalb kurzer Zeit den Regeldruck von 5 bar plus den aktuellen Wert des automatischen Angleichers erreicht und über die ganze Lösephase hält. Damit lassen sich erhebliche Lösezeitverbesserungen erzielen. Eine Information über Zuglänge oder -gewicht ist unnötig. Durch die Berücksichtigung des HL-Druckes und der Druckdifferenz $\Delta P$ am Strömungsmesser 18 erfährt der A-Druck eine lang andauernde Überhöhung bis zu 0,65 bar ohne Gefahr, über das Relaisventil 9 die Bremse zu überladen. Die Lösezeit ist hierdurch beträchtlich verkürzt und entspricht der Eigenzeit des Steuerventils.

Für extrem lange bzw. schwere Züge sind die vorgeschlagenen Maßnahmen, eine Lösezeit in Eigenzeit des Steuerventiles zu erzielen, ausreichend. Für Züge mit größerem Luftverbrauch erhält man eine Verbesserung dadurch, daß der Wert des automatischen Angleichers angehoben wird bzw. der Anfangswert eine vorgegebene Zeit konstant gehalten wird. Diese Maßnahme kann unabhängig von der gemessenen Nachspeiseleistung $\Delta P$ sein.

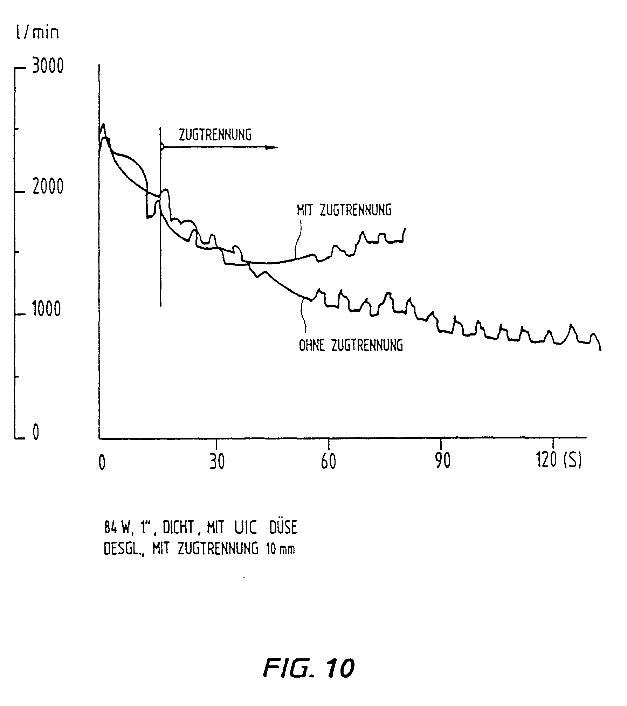

Weiterhin kann durch das Strömungssignal SM (Leitung 19) eine Zugtrennung festgestellt werden. Wie aus Fig. 10 ersichtlich, läßt selbst bei sehr langen Zügen und/oder eventuellen Undichtigkeiten der HL-Leitung die Nachspeiseleistung beim Lösevorgang kontinuierlich nach. Bei Zugtrennung dagegen steigt die Nachspeiseleistung nach einer anfänglichen Abfallphase wieder an, so daß ein klares Unterscheidungskriterium zwischen Zugtrennung und Füllen vorhanden ist. Dies kann in dem Schaltkreis 132 überwacht werden, in dem der Gradient des Strömungssignales nach einer vorgegebenen Zeitdauer mit einem Schwellwert verglichen wird. Hierauf kann das Zugtrennungssignal ZT erzeugt werden.

Fig. 8 zeigt in einer Prinzip-Skizze des Führerbremsventils primär die Anordnung des pneumatischen Leistungsteiles. Gleiche Bezugszeichen wie in den übrigen Figuren bezeichnen auch hier gleiche oder einander entsprechende Teile. Die Grundkomponenten sind:

- Ein Anlog-Wandler mit dem Löse-Magnetventil 93, dem Brems-Magnetventil 94 sowie den Druckaufnehmer 965;
- ein Druckminderventil 140,
- das vorgesteuerte Füllstoßmagnetventil 96,
- ein pneumatisches Relaisventil 141 (entspricht im wesentlichen dem Relaisventil 9 der Fig. 1).
- in dem Gehäuse des Relaisventils 141 untergebrachte pneumatische Absperrventile 142 für den Vorsteuerdruck A und 143 für den Hauptluftleitungsdruck HL sowie das Querschnitts-Wechselventil 144;
- der Steuerdruckbghälter 12 (mit einem Volumen von z. B. 51),
- der Strömungsanzeiger bzw. Differenzdruckmesser 18;
- das Querschnittswechsel-Magnetventil 145;
- ein Druckschalter 146 zur Überwachung des HB-Druckes und
- ein pneumatisches Füllstoßventil 147.

Die Regel-Elektronik 6 steuert elektrisch die Magnetventile 93, 94, 96 und 194 an und erhält ihrerseits Meßsignale von den Meßwandlern 95, 146, 16 und 18.

Das Absperrmagnetventil 148, welches pneumatisch die Absperrventile 142 und 143 betätigt, wird dagegen nicht von der Regel-Elektronik 6 angesteuert, sondern durch die von der Elektronik unabhängige Notbremsschleife.

Weiterhin sind die mechanisch betätigbaren Schnellbremsventile 26 und 27 dargestellt. Der Ansteuerkreis für beide Führerstände enthält jeweils ein Steuergerät 148 bzw, 149, einen Angleicher-Taster 150 bzw. 151 ein pneumatisches, mit elektrischen Kontakten versehenes Ventilschloß 152 bzw. 153 sowie jeweils eine Sifa-Taste 25 und eine ATC-Taste 5.

In Fig. 8 sind lediglich die elektronisch-stellungsabhängig vorgesteuerte indirekte Führerbremsventilanlage und die mechanisch betätigbaren Schnellbremsventile dargestellt. Zusätzlich kann aus Sicherheitsgründen eine (nicht dargestellte) pneumatisch-stellungsabhängig vorgesteuerte, direkte Führerbremsventilanlage als Zusatzbremse vorgesehen sein sowie eine indirekt wirkende Notbetriebseinrichtung, die nach Umlegen eines Umstellhebels des Führerbremsventils der Zusatzbremse angesteuert wird. Die indirekte und die direkte Führerbremsventilanlage werden gemeinsam von dem pneumatischen, mit elektrischen Kontakten versehenen Ventilschloß 152 bzw. 153 abgesperrt.

In Fig. 8 ist das Führerbremsventil in Fahrtstellung dargestellt. Auf dem links dargestellten Führerstand ist das Ventilschloß 152 aufgesperrt, der Führerbremshebel 154 des Steuergerätes 148 befindet sich in Fahrtstellung.

Das Ventilschloß 153 des rechts abgebildeten Führerstandes ist dagegen geschlossen.

Beim Aufsperren des Ventilschlosses 152 wird der Kontakt b geöffnet und der Kontakt a geschlossen. Dadurch wird die Überbrückung des Schnellbremskontaktes SB im Steuergerät 148 unterbrochen und die Regel-Elektronik 6 durch Erregen des Relais A mit Strom versorgt. Dieses Relais A schaltet noch weitere, hier nicht dargestellte Funktionen. Über die Diode D1 wird das Relais C erregt und über den Kontakt C1 das Absperr-Magnetventil 148 parallel in den Stromkreis der Notbremsschleife geschaltet und erregt. Das Ventil 148 öffnet und läßt HB-Druck zu dem Druckschalter 146 und zu den Absperrventilen 142 und 143 im Relaisventil, welche hierdurch in die dargestellte geöffnete Stellung gelangen. Die Kolben 155 und 156 werden hierbei nach links bzw. nach rechts verschoben und öffnen Ventilsitze 157 bzw. 158, so daß A-Druck in die Kammer 159 bzw. HL-Druck über die Düse 160 in die Kammer 161 des Relaisventils 141 gelangen kann. Das Relaisventil ist damit aktiviert und mit der Hauptluftleitung 11 verbunden. Der Druckschalter 146 signalisiert den druckbeaufschlagten, d. h. geöffneten Zustand der Absperrventile 148, 142 und 143.

Entsprechend den Signalen für Bremsen, Lösen, Angleichen und Füllstoß regelt der Analog-Wandler Höhe des A-Druckes ein. Das Relaisventil 141 stellt dann in an sich bekannter Weise den entsprechenden Druck in der Hauptluftleitung 11 ein.

Im Folgenden werden die Brems- und Lösevorgänge beschrieben. Abhängig von der Stellung des Führerbremshebels 154 ändert sich der Spannungsabfall am Stellpotentiometer 162 des Steuergerätes 148. Wie im Zusammenhang mit Fig. 5 ausführlich erläutert, gelangt dieses Signal zur Regel-Elektronik 6. Welche die Magnetventile 93, 94 und 96 ansteuert, so daß die Be- und Entlüftung des Steuerbehälters 12 bzw. die Höhe des A-Druckes eingesteuert wird. Das augenblickliche Niveau des A-Druckes wird über den Druckgeber 95 gemessen und an die Regel-Elektronik 6 gemeldet. Durch pulsmodulierte Ansteuerung des Brems- oder Lösemagnetventils 94 bzw. 93 wird der A-Druck an den geforderten Wert herangeführt. Druckverluste werden selbsttätig nachgespeist. Im einzelnen: der HB-Druck wird im Druckminderventil 140 auf einen vorgegebenen, einstellbaren (Schraube 163) Wert von beispielsweise 6 bar begrenzt und gelangt über ein Rückschlagventil 164 an den Eingang des Lösemagnetventils 93. Wird dieses durch Erregung geöffnet, so gelangt reduzierter HB-Druck zu dem A-Druckbehälter 12 und über das geöffnete Absperrventil 142 in die Kammer 159. Der Membrankolben 162, der auf der anderen Seite mit HL-Druck beaufschlagt ist, verschiebt sich nach rechts und öffnet den Ventilsitz 163, so daß HB-Druck aus dem Raum 164 in den Raum 165 strömen kann und von dort über die Düse 166 zur HL-Leitung 11 gelangt.

Beim Bremsen wird das Magnetventil 94 erregt, der A-Druck über die Öffnung 13 abgesenkt, worauf sich der Membrankolben 162 nach links verschiebt, wodurch der Ventilsitz 167 geöffnet wird, so daß sich der Druck in der Kammer 165 durch den hohlen Schaft des Membrankolbens 162 hindurch zur Kammer 168 und von dort zur Atmosphärenöffnung 169 abbauen kann, wodurch abgesenkt wird.

Zwischen Fahrt- und Vollbremsstellung können sechs gerasterte Brems- bzw. Lösestufen eingesteuert werden. Die erste Bremsstufe führt zu einer Druckabsenkung von 0,4 bar in der Hauptluftleitung 11. Dies entspricht gleichzeitig der vorletzten Lösestufe. Die letzte Lösestufe stellt sich auf ca. 0,3 bar unter dem Regeldruck ein.

Wird der Führerbremshebel 154 in Schnellbremsstellung gezogen, so wird der Schalter SB im Steuergerät 148 geöffnet. Dadurch wird ein (nicht dargestelltes) Vorsteuer-Magnetventil des Sifaventils entregt und der Vorsteuerraum im Sifaventil entlüftet, wodurch der Kolben des Sifaventiles die Hauptluftleitung 11 großquerschnittig entlüftet. Gleichzeitig wird das Absperrmagnetventil 148 entregt, die Absperrventile 142 und 143 werden geschlossen, da sich der zu ihrer Betätigung benötigte HB-Druck über das Absperr-Magnetventil abbaut, wodurch die Kolben 155 und 156 nach rechts bzw. nach links bewegt werden und die Ventilsitze 157 bzw. 158 geschlossen werden. Dadurch wird die Nachspeisung durch das Relaisventil 141 in die Hauptluftleitung 11 verhindert. Wenn der Hauptluftleitungsdruck auf ca. 0,8 bar gefallen ist, schließt der Kolben des Sifaventils wieder selbsttätig ab.

Wird der Führerbremshebel 154 wieder aus der Schnellbremsstellung herausbewegt, so schließt der Schalter SB im Steuergerät 148. Das Magnetventil des Sifaventils und das Absperr-Magnetventil 148 werden erregt, so daß die Hauptluftleitung 11 vom Relaisventil 141 wieder gefüllt werden kann. Die Schnellbremsung kann nicht vom abgesperrten Steuergerät aus eingeleitet werden. Dafür steht im Notfall der separat angeordnete Notbremshahn 26 bzw. 27 zur Verfügung.

Im Folgenden wird der Angleicher-Vorgang erläutert: Durch Drücken des Angleicher-Knopfes 150 (bzw. 151) am aufgesperrten Steuergerät 148 (bzw. 149) kann die Hauptluftleitung überladen werden. Je länger der Knopf niedergedrückt wird, desto stärker wird der A-Druck erhöht. Die maximale Überladung stellt sich nach ca. 10 Sekunden ein. Der Angleicher wird nur wirksam, wenn der Führerbremshebel 154 in Fahrtstellung steht. Im Anschluß an jeden Lösevorgang stellt sich automatisch durch die Regel-Elektronik 6 eine Überladung zur Lösebeschleunigung ein. Die Höhe dieser Überladung ist abhängig von der Größer der vorangegangenen Einbremsung. Die Überladung wird entsprechend einem festgelegten Gradienten (Taktgenerator 73 in Fig. 50) so langsam abgebaut, daß die Steuerventile nicht ansprechen.

Für den Füllstoß wird der Führerbremshebel 154 in Füllstellung gelegt, der Schalter FÜ schließt, worauf über die Regel-Elektronik 6 das Füllstoß-Magnetventil 96 erregt wird. HB-Druck beaufschlagt den federvorgespannten Kolben 170 des Füllstoßventils 147, wodurch der Ventilsitz 171 öffnet und den A-Druck auf HB-Druck anhebt. Dadurch steuert der Kolben 162 im Relaisventil 141 voll durch und öffnet wiederum den Ventilsitz 163. Gleichzeitig wird das Querschnittwechsel-Magnetventil 145 erregt, HB-Druck gelangt auf den Ventilkolben 172, wodurch ein großquerschnittiger Ventilsitz 173 geöffnet wird, so daß sich in der Hauptluftleitung ein Hochdruck-Füllstoß einstellen kann. Wird der Führerbremshebel 154 beim Loslassen aus der Füllstellung in die Fahrstellung zurückgedrückt, so wird der HB-Druck im Vorsteuerkreis über die Auslaßdüse 13 des Magnetventils 94 abgebaut. Dadurch bricht der Hochdruck-Füllstoß nicht schlagartig zusammen, sondern wird langsam abgesteuert. Dadurch wird z. B. ein ungewolltes Ansprechen empfindlich eingestellter Schnellbremsbeschleuniger mit ungenügendem Füllstoßschutz sicher vermieden.

Wenn der A-Druck auf ca. 5,2 bar abgesteuert ist, wird der A-Druck stetig übergehend auf jenes überladene Druckniveau abgesteuert, das sich automatisch am Ende eines Füllstoßes einstellt. Die Höhe dieser Überladung ist abhängig von der Länge des Füllstoßes und beträgt ca. 0,2 bar. Diese Überladung stellt sich nach einem Füllstoß von ca. 4 Sekunden Dauer ein. Längere Füllstöße überhöhen die Überladung nicht mehr. Die Überladung wird nach dem gleichen Gradienten wie bei einem Angleich-Vorgang abgebaut.

Im Folgenden wird das Absperren erläutert: Durch Absperren des Ventilschlosses 152 bzw. 153 wird der Kontakt a geöffnet und der Kontakt b geschlossen. Dadurch wird das Relais A entregt und die Regel-Elektronik 6 inaktiviert. Außerdem fällt das Relais C ab, der Kontakt C1 öffnet und der Kontakt C2 schließt. Durch das Abfallen des Magnetventils 148 werden im Relaisventil die beiden Absperrventile 142 und 143 pneumatisch geschlossen, so daß die pneumatische Verbindung zwischen Relaisventil und Hauptluftleitung und Relaisventil und A-Druck-Leitung unterbrochen werden. Gleichzeitig wird im Relaisventil 141 der A-Druck auf ca. 2,5 bar abgesenkt (gesteuert durch die A-Druck-Beaufschlagung des Kolbens 155 aus der Kammer 159 entgegen einer Federbelastung), so daß ein undichtes Absperrventil in keinem Fall zum Lösen der Bremse führen kann.

Durch das Aufsperren des Ventilschlosses wird auch ein Ventilschloßkolben betätigt, der HB-Druck zur (nicht dargestellten) Zusatzbremse liefert und diese aktiviert.

Beide Steuergeräte 148 und 149 weisen weitere Kontakte für eine E-Bremse auf, die im vorliegenden Zusammenhang nicht weiter interessieren.

Die Wirkungsweise der Meßfühler 16 und 18 zur Lösebeschleunigung wurde ausführlich im Zusammenhang mit Fig. 5 und insbesondere mit Fig. 7 erläutert, so daß hier nicht weiter darauf eingegangen werden muß.

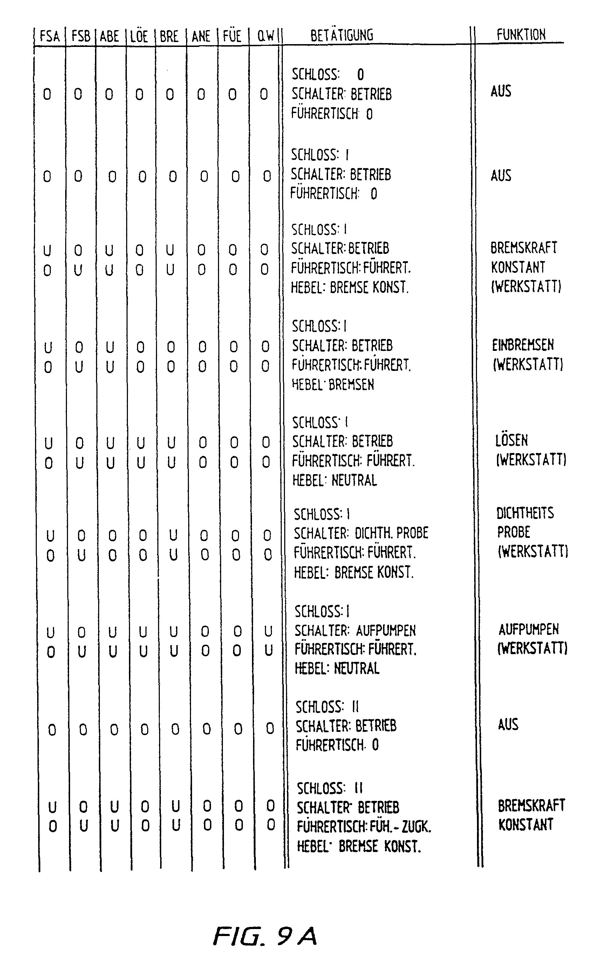

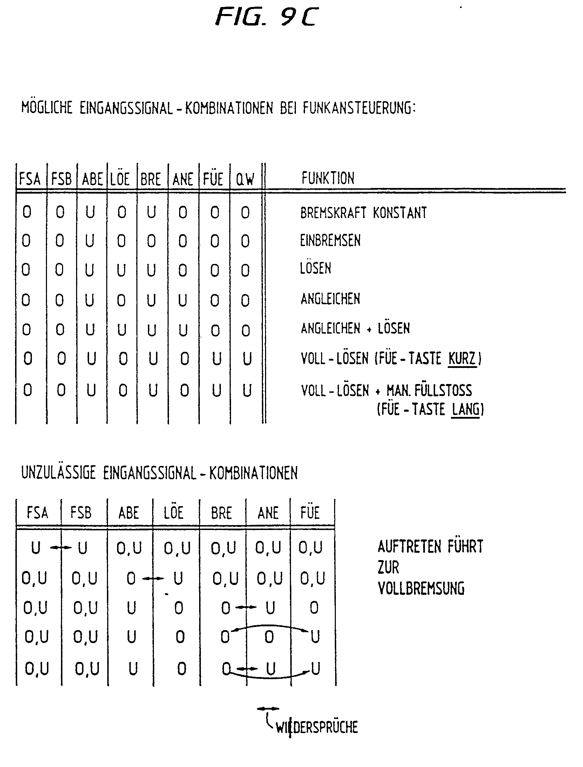

Da genereller Aufbau und Funktion des pneumatischen Relaisventils 141 bekannt sind, sind ebenfalls nähere Erläuterungen hier entbehrlich. Fig. 9A und Fig. 9C zeigt die Zuordnung von Funktion, Betätigungselementen und Eingangssignalen des Führerbremsventils nach der Erfindung. Die Bedeutung der verwendeten Abkürzungen wurde im zusammenhang mit Fig. 7 erläutert. Mit dem Symbol «O» wird kein Signal und mit dem Symbol «U» ein vorhandenes Signal bezeichnet. Mit «Schloß I» bzw.« Schloß II» sind die Ventilschlösser 152 bzw. 153 der Führerstände A und B gemäß Fig. 8 bezeichnet.

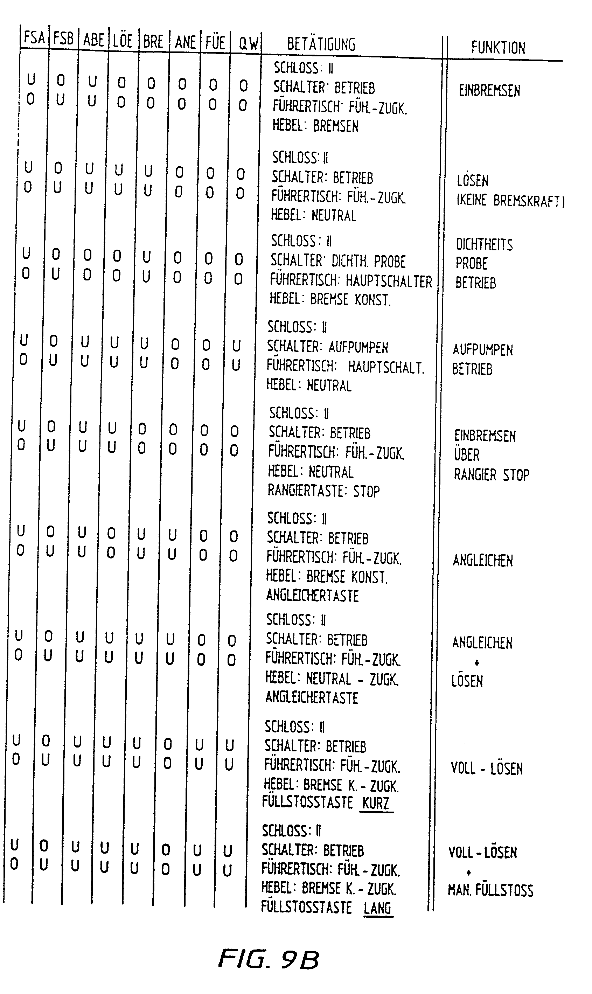

Damit sind die Figuren 9A und 9B ohne weitere Erläuterungen verständlich.

Fig. 9C zeigt noch mögliche Eingangssignal-Kombinationen bei Funktionssteuerung sowie unzulässige Eingangssignal-Kombinationen, deren Auftreten zur Vollbremsung führt.

Bei den unzulässigen Eingangssignal-Kombinationen werden jeweils Widersprüche erkannt, wie z. gleichzeitiges Auftreten der Signale FSA und FSB (d. h. beide Führerstände dürfen nicht bezetzt sein) gleichzeitiges Bremsen und Angleichen, gleichzeitiges Bremsen unf Füllen, wobei darauf hinzuweisen ist, daß das Bremssignal «BRE» in inverser Logik vorliegt.

Fig. 10 zeigt den Luftdurchsatz durch die HB-Leitung in Abhängigkeit der Zeit und wurde in Zusammenhang mit Fig. 7 bereits erläutert, wo das Erkennen der Zugtrennung beschrieben wurde. Das Diagramm wurde für einen 84 Wagen aufweisenden Zug mit 1"-Hauptluftleitung geschrieben, die über eine UIC-Düse nachgespeist wird. Ohne Zugtrennung ist die Hauptluftleitung dicht, «mit Zugtrennung» weist die Hauptluftleitung eine Öffnung von 10 mm Durchmesser auf.

Fig. 11 zeigt die statische Signal-Charakteristik des HL-Druckes in Abhängigkeit vom Brems-Sollwert. Insbesondere ist das Ansprung-Verhalten (Baugruppen 64 und 65 der Fig. 5C) zu erkennen, wobei die Schwellwerte S2 und S1 der Fig. 11 den Schwellwerten $S_{P2}$, $S_{P1}$ bzw. $S_{A1}$ der Baugruppen 64 und 65 entsprechen. Auch ist die Invertierung (Subtrahierer 67) sowie die Addition des Basis-Sollwertes $U_O$ (Summierer 71 und 92 der Fig. 5C) erläutert.

Fig. 12 zeigt den Gradienten des Druck-Sollwertes beim Bremsen und Lösen, der durch das Zeitglied 69 der Fig. 5C vorgegeben wird. Die Bremszeit ist hierbei $T_{BE}$, während die Lösezeit $T_{BA}$ ist.

Fig. 13 und 14 zeigen den Verlauf des Druckes bzw. des Druck-Sollwertes für manuelles bzw. automatisches Angleichen. Mit «TANE» bzw. «TANA» sind die Gradienten für Anstieg und Abfall bezeichnet, die durch die Frequenzumschaltung des Takt-Generators 73 verursacht werden. Bemerkenswert ist, daß beim Absenken der Druck praktisch linear heruntergefahren wird. Aus Fig. 14 ist zusätzlich die Angleicher-Überhöhung zu erkennen.

Fig. 15 zeigt den Verlauf von Druck-Sollwert und Angleicherwert beim Füllstoß und zwar bei einem kursen und bei einem langen Füllstoß bzw. Angleichervorgang.

Kurz zusammengefaßt hat das Führerbremsventil nach der Erfindung folgende Merkmale: Ein Teil des Führerbremsventils ist für alle Funktionen des Betriebsbremsbereiches zuständig. Es wird rein elektronisch ein Soll-Wert für den Vorsteuerdruck (A-Druck) gebildet, der in einem Analog-Wandler in einen pneumatischen Druck umgesetzt wird und dann in herkömmlicher Weise ein Relaisventil steuert. Ein Zweiter Teil ist nur für die Schnellbremsung zuständig, wobei aus Sicherheitsgesichtspunkten die Steuerung das Ruhestromprinzig anwendet. Dieser Teil ist unabhängig von der Regel-Elektronik. Die Struktur des Betriebsbremsbereiches ist wie folgt:

a) Es sind vorsteuernde, rein elektrisch arbeitende Bedieneinrichtungen am Führertisch vorhanden, nämlich: Schloß, Führerbremshebel, Angleicher, Füllstoßbetätigung. Ihre Funktion ist die Signalabgabe bzw. Signalerzeugung.

b) Eine zentrale Regel-Elektronik für alle Steuerungs- und Regelfunktionen des Teilsystems gibt nach Verarbeitung aller Eingangssignale einen A-Druck-Sollwert ($U_{SOLL}$) aus ggf. auch eine selbsttätige Vollbremsung.

c) Ein zentraler, elektro-pneumatischer Leistungsteil mit EP-Wandler, Relaisventil und Sensoren für A-, HB-Druck und Durchfluß meldet Ist-Werte an die Regel-Elektronik. Hauptregelgröße ist der A-Druck. Der HL-Druck wird über das Relaisventil nachgeführt.

Mit dieser grundlegenden Struktur ergeben sich folgende Vorteile:

- Einbaugünstige Gestaltung der Bedienelemente am Führertisch, da pneumatische Leitungen fehlen.
- Ersatz aufwendiger und voluminöser mechanisch-pneumatischer Steuerungs- und Regelorgane durch die zentrale Regel-Elektronik.
- Funktionsverbesserung durch höherwertige Steuerungs-, Regel- und Überwachungs-Logiken.

Die zentrale Regel-Elektronik führt folgende grundlegende Funktionen durch:

a) Auswahl des jeweils maximalen Bremsanforderungssignals aus den Eingängen von

- Führerstand (BRE bzw. POTi)
- automatische Zugkontrolle (ATC)
- automatische Zugsteuerung (AFB)

b) Analyse der gewünschten Funktionen aus Kombinationen der Eingangssignale und zwar:

- der Schloßbetätigung (FSA, FSB, ABE)
- der Steuereinrichtungen am Führertisch (BRE und LÖE bzw. POTi, Angleich, Füllstoß, Schnellbremsung)
- Bremsanforderung über Funk (Logik s. Fig. 9).

Die vorgeschlagene Logik ermöglicht die eindeutige Bestimmung der verschiedenen Funktionen, nämlich:

- Aus, Dichtheitsprüfung, Einbremsen, Lösen, Angleichen, Füllstoß.

Fehlbedienungen werden vollständig vermieden.

c) Abstimmung zwischen stufenlosen (AFB, ATC) und gestuften Bremsanforderungs-Signalen (POTi, Stufenschalter)

durch besonderes Ansprungverhalten. Für das stufenlose Signal wird eine Schwelle in Höhe der ersten Bremsstufe des gestuften Signales erzeugt, unter der das stufenlose Bremsanforderungs-Signal wirkungslos bleibt.

d) Berücksichtigung des Druckabfalles in der HL-Leitung und des Druckunterschiedes A/HL am Relaisventil. Zu diesem Zweck ist am HL-Anschluß ein zusätzlicher Druckgeber angeordnet und am HB-Anschluß ein Durchflußmesser. Der Druck-Sensor HL liefert die Druckdifferenz A/HL. Der Durchflußgeber (Blende und Druckdifferenzmessung) liefert über das ΔP-Signal die Information über den Druckabfall in der HL-Leitung bis zum ersten Steuerventil. Der A-Druck-Sollwert wird mit Hilfe dieser Messungen so angehoben, daß der HL-Druck am ersten Steuerventil nicht über das funktionell zulässige Niveau angehoben wird.

e) Berücksichtigung zusätzlicher A-Druck-Sollwertanteile vom Angleicher und Füllstoß. Um diese Sollwertanteile wird der A-Druck-Sollwert zusätzlich angehoben.

f) Die Angleicherfunktion ist in detaillierter Form vorgesehen. Zu diesem Zweck wird die Betätigungsdauer des manuellen Angleichers, des manuellen Füllstoßes oder die Höhe der Lösestufe in eine entsprechende Zahl von Impulsen gewandelt, die wiederum in einen entsprechenden A-Druck-Sollwertanteil gewandelt werden. Der Abbau des Sollwert-Anteiles erfolgt analog (D/A-Wandler 75) über eine Rückwärtszählung, wobei die Frequenz der Rückwärtszählung zwangsläufig niedriger liegt, um den UIC-Vorschriften über den Abbau der A-Drucküberhöhung genüge zu tun.

Bei Lösevorgängen ist die A-Drucküberhöhung nicht nur von der Lösestufe abhängig, sondern auch vom Nachspeiseverhalten, bedingt durch die Zugkonfiguration (lange Züge, etc.). Zu diesem Zweck wird der Verlauf der Nachspeisung in Intervallen abgefragt:

– Bei weitgehend konstanter Nachspeisung im Abfrage-Intervall liegt ein langer und/oder undichter Zug vor. Der Zählerstand wird erhöht und der A-Druck-Anteil angehoben, um den Lösevorgang zu verkürzen.
– Bei abfallender Nachspeisung liegt ein kurzer Zug vor, so daß der Angleicher-Anteil reduziert wird, weil mit baldigem Abschluß des Lösevorganges gerechnet werden kann.
– Zusätzlich wird die Nachspeiseleistung im Lösevorgang verglichen mit dem gespeicherten Wert der Nachspeisung im vorausgegangenen gelösten Zustand. Haben die verglichenen Nachspeiseleistungen ein definiertes Verhältnis der Annäherung erreicht, so wird der Angleicher-Vorgang gesteuert zum Abschluß gebracht. Dadurch wird verhindert, daß bei stark undichten Zügen die beschriebene Logik den Angleicher-Vorgang nicht zum Abschluß bringt.

g) Selbsttätige Füllstoßfunktion: bei allen Lösevorgängen erfolgen selbsttätig kurze, definierte Füllstöße, deren Dauer auf den Lösevorgang (Lösestufe) abgestimmt ist. Durch den automatischen Angleicher wird der manuelle Füllstoß willkürlicher Dauer überflüssig.

h) Überwachung auf Zugtrennung: die hochgenaue, hysteresefreie Erfassung der Nachspeiseleistung ermöglicht die ständige Überwachung der Bremsanlage auf Zugtrennung oder Defekte in der HL-Leitung. Als Kriterium wird der unbegründete Anstieg der Nachspeiseleistung verwendet. Die Überwachungslogik schließt deshalb aus:

– Erhöhung der Nachspeiseleistung aufgrund A-Druckerhöhungen durch die Angleicherfunktion. Diese Veränderungen müssen im engen zeitlichen Zusammenhang stehen.
– Erhöhung der Nachspeiseleistung aufgrund schwankender Undichtigkeit der Zugkonfiguration. Der erneute Abfall der Nachspeiseleistung löscht die Anzeige der Zugtrennung.
– Erhöhung der Nachspeiseleistung aufgrund schwankenden HB-Druckes. Das Ansteigen der Nachspeiseleistung in definierten Grenzen ist begründet, wenn gleichzeitiger Kompressorbetrieb gemeldet wird.

i) Verzögertes Einbremsen bei Führerstandwechsel: Bei Führerstandwechsel wird die Bremsanlage kurzzeitig in die AUS-Stellung gebracht. Es ist jedoch nicht vorteilhaft, bei diesem Vorgang die Hauptluftleitung kurzzeitig weitgehend zu entlüften. Es wird deshalb die bei Führerstandwechsel auftretende Eingangssignalkombination benutzt, um die Entlüftung der Hauptluftleitung zu verzögern. Das Abziehen des Schlüssels ist beispielsweise bei zeitabhängiger Anlage durch folgende Signalkombination bestimmt:

| Davor: | FSA | FSB | ABE | BRE | LÖE | ANE | FÜE |
|--------|-----|-----|-----|-----|-----|-----|-----|
|        | U   | O   | O   | O   | O   | O   | O   |
|        | O   | U   | O   | O   | O   | O   | O   |
| Danach: | O  | O   | O   | O   | O   | O   | O   |

Also FSA oder FSB wechselt auf O bei ABE = O.

Bei Vorliegen dieser Situation wird die Anlage beispielsweise für 15 Sekunden in die Mindestbremsstufe überführt. Anschließend wird selbsttätig der AUS-Zustand eingenommen, wobei das Relaisventil abgesperrt und HL nach O entlüftet wird.

Dieser Vorgang unterscheidet sich signalmäßig nur durch ABE vom Einbremsvorgang über Funk, für den folgende Signalkombination gilt:

FSA, FSB, BRE, LÖE, ANE, FÜE = O

ABE = U

In diesem Fall wirk bekannterweise zügig eingebremst und das Relaisventil ist nicht abgesperrt.

Das Verschwinden von ABE (ABE geht zu O) bei FSA = FSB = O gilt als Funktionsstörung bei Funkbetrieb und führt zur sofortigen Vollbremsung. Ein Betriebsrisiko durch verzögertes Einbremsen ist dadurch ausgeschlossen.

Ein weiterer besonderer Vorteil der Erfindung wird in der verbesserten Lösefunktion gesehen, die nicht nur die Lösezeit langer Züge auf das mögliche Mindestmaß verkürzt, sondern auch das Erkennen eines Defektes in der HL-Leitung im ungünstigsten Fall (Zugtrennung während des Lösens) ermöglicht.

## Patentansprüche

1. Führerbremsventil für selbsttätige, indirekt wirkende Druckluftbremsen von Schienenfahrzeugen mit elektrischen Eingabeeinrichtungen (1 bis 5), deren elektrische Steuersignale (BRE, LÖE, FÜE, ANE, ATC, AFB; und ggf. FSA, FSB, ABE) in einem elektro-pneumatischen Wandler (EP-Wandler 7) mit Löse- und Bremsmagnetventilen (93, 94) in einen pneumatischen Vorsteuerdruck (A-Druck) umgesetzt werden, welcher ein von einer Hauptbehälterleitung (10) gespeistes, den Druck (HL-Druck) in einer Hauptluftleitung (11) überwachendes Relaisventil (9) steuert, wobei ein Druck/Spannungswandler (95) ein dem A-Druck proportionales Signal ($U_{ISTA}$) erzeugt und wobei eine Regelelektronik (6) vorgesehen ist, die in Abhängigkeit von den elektrischen Steuersignalen und dem Signal des gemessenen A-Druckes ($U_{ISTA}$) ein elektrisches Sollwertsignal ($U_{SOLL}$) erzeugt, das dem EP-Wandler (7) als Eingangssignal zugeführt wird, *dadurch gekennzeichnet* daß in der Hauptbehälterleitung (10) ein Strömungssensor (18) vorgesehen ist, der die Nachspeiseleistung aus der Hauptbehälterleitung (10) mißt (Signal SM) und daß in der Hauptluftleitung (11) ein Drucksensor (16) vorgesehen ist, der den HL-Druck mißt, wobei die Ausgangssginale der Meßfühler (16, 18) zur Korrektur des Sollwert-Signales ($U_{SOLL}$) verwendet werden und wobei durch diese gemessenen Signale der HL-Druck auf den Druck am ersten Steuerventil transformiert wird, wodurch der HL-Druck in Abhängigkeit von der Leitungslänge (Zuglänge) erhöhbar ist und die Länge des Füllstoßes an die Leitungslänge angepaßt wird.

2. Führerbremsventil nach Anspruch 1 *dadurch gekennzeichnet*, daß ein in einem Stufenschalter, Potentiometer oder durch die Zeitdauer der Betätigung eines elektrischen Tasters (40, 41; 162) erzeugtes elektrisches Bremsanforderungssignal ($U_{POT}$) durch einen Schwellwertschaltkreis (64) überwacht wird und nur dann wirksam geschaltet wird (Schalter 68), wenn ein Schwellwert ($S_{P2}$, $S_{P1}$) der einer ersten Bremsstufe entspricht, erreicht ist, daß das Bremsanforderungssignal ($U_{POT}$ ; $U_{B1}$) in einem Subtrahierer (67) invertiert wird, indem es von einem maximal möglichen Bremsanforderungssignal ($V_{BMAX}$) subtrahiert wird und daß das invertierte Bremsanforderungssignal ($U_B$) in einem Zeitglied (69) in seinem Anstiegs- oder Abfallgradienten (zeitliche Änderung des Signales) begrenzt wird.

3. Führerbremsventil nach Anspruch 2, *dadurch gekennzeichnet*, daß ein aus einer automatischen Zugsteuerung (ATC) bzw. einer automatischen Fahr- und Bremssteuerung (AFB) stammendes Bremsanforderungssignal (ATC; AFB) ebenfalls in einem Schwellwertschaltkreis überwacht wird und nur dann wirksam geschaltet wird (Schalter 68) wenn ein Schwellwert ($S_{A1}$, $S_{A2}$) der der ersten Bremsstufe entspricht, erreicht ist und daß ein Maximalwert-Auswahlschaltkreis (47, 50; 63) vorgesehen ist, der das maximale Bremsanforderungssignal ($U_{B1}$ = max. von $U_{POT}$ AFB, ATC) auswählt.

4. Führerbremsventil nach Anspruch 2 oder 3, *dadurch gekennzeichnet*, daß das gradientenbegrenzte, invertierte maximale Bremsanforderungssignal ($U_{BV1}$) mit einem Faktor ($K_B$) multipliziert (Multiplizierer 7) wird, wobei das Ausgangssignal ($U_{BV}$) des Multiplizierers (7) einem Summierer (71) zugeführt wird, in welchem es zur Bildung des Sollwertsignales ($U_{SOLL}$) mit Korrekturgrößen ($\Delta U_O$, $U_O$ $U_{FÜ}$, $U_{AG}$) beaufschlagt wird.

5. Führerbremsventil nach Anspruch 4, *dadurch gekennzeichnet*, daß das Sollwertsignal ($U_{SOLL}$) in einem Vergleicher (99) mit dem Istwertsignal ($U_{ISTA}$) des A-Druckes verglichen wird und daß die hieraus ermittelte Regelabweichung über einen Regler (101) und zwei Vorzeichendiskriminatoren (102, 103) je nach Vorzeichen zur Ansteuerung des Brems-Magnetventils (94) oder des Lösemagnetventils (93) verwendet wird, wodurch der A-Druck eingestellt wird.

6. Führerbremsventil nach einem der Ansprüche 1 bis 5, *dadurch gekennzeichnet*, daß eine Endstufenabschaltung (schaltbare Magnetventil-Treiberverstärker 104, 105) vorgesehen ist, die die Ansteuerung der Brems- und Lösemagnetventile (94, 93) unterbindet, solange der von einem Druckschalter (146) überwachte Hauptbehälterdruck (HB-Druck) einen vorgegebenen Mindestwert unterschreitet.

7. Führerbremsventil nach Anspruch 6, *dadurch gekennzeichnet*, daß die Endstufenabschaltung (104, 105) während einer durch ein Zeitglied (129) vorgegebenen Zeitdauer nach dem Einschalten der elektrischen Energieversorgung wirksam geschaltet ist.

8. Führerbremsventil nach einem oder mehreren Ansprüchen 1 bis 7, *dadurch gekennzeichnet*, daß ein Füllstoß-Magnetventil (96) vorgesehen ist, welches den Hauptbehälterdruck (HB-Druck) direkt mit dem A-Druck verbindet, und daß das Füllstoßsignal in Zeitgliedern (83, 84) in seinem Anstiegs- und Abfallgradienten begrenzt wird, wobei das gradien-

tenbegrenzte Füllstoßsignal $U_{Fü}$ in dem Summierer (71) zur Bildung des Sollwertsignals ($U_{SOLL}$) beiträgt.

9. Führerbremsventil nach Anspruch 8, *dadurch gekennzeichnet*, ein Flip-Flop (89) gesetzt wird, welches ein Querschnittswechselrelais (56) erregt, wodurch über einen Relaiskontakt (58) ein Querschnittswechsel-Magnetventil (145) erregt wird, welches während des Füllstoßes einen großquerschnittigen Ventilsitz (173) öffnet, welcher HB-Druck und HL-Druck miteinander verbindet.

10. Führerbremsventil nach Anspruch 9, *dadurch gekennzeichnet*, daß das Flip-Flop (89) zurückgesetzt wird, wenn der A-Druck (Signal $U_{ISTA}$) einen Schwellwert ($U_R$) (Schwellwertschalter 90) erreicht hat.

11. Führerbremsventil nach Anspruch 10, *dadurch gekennzeichnet*, daß der Schwellwertschalter (90) umschaltbar ist.

12. Führerbremsventil nach einem der Ansprüche 1 bis 11, *dadurch gekennzeichnet*, daß zur Realisierung einer Ausgleicherfunktion ein frequenz-umschaltbarer Taktgenerator (73) und ein nachgeschalteter, umschaltbarer Vorwärts-Rückwärtszähler (74) mit nachgeschaltetem Digital/Analogwandler (75) vorgesehen sind zur Erzeugung eines Ausgleichersignals ($U_{AG}$), welches in dem Summierer (71) zur Bildung des Sollwertsignales $U_{SOLL}$ verwendet wird.

13. Führerbremsventil nach Anspruch 12, *dadurch gekennzeichnet*, daß beim Angleichervorgang nach einer Druckanhebung der Druck zeitlinear (Taktgenerator 73) durch den als Rückwärtszähler geschalteter Zähler (74) abgesenkt wird.

14. Führerbremsventil nach einem oder mehreren Ansprüchen 1 bis 13, *dadurch gekennzeichnet*, daß die Angleicherfunktion zusätzlich beim schnellen Lösen (Signal $U_{B1}$) (Umschalter 85: Vergleicher 78) verwendet wird.

15. Führerbremsventil nach einem der Ansprüche 12 bis 14, *dadurch gekennzeichnet*, daß der Angleichervorgang beendet ist, wenn der Zähler (74) den Wert Null erreicht hat.

16. Führerbremsventil nach einem oder mehreren Ansprüchen 1 bis 15, *dadurch gekennzeichnet*, daß Überwachungseinrichtungen (114, 115) vorgesehen sind, die die Differenz zwischen Bremsanforderungssignal ($U_{POTDZW\ MAX.\ aus\ max.\ aus\ AFB\ und\ ATZ}$) und dem Ausgangssignal ($U_{BVI}$) des Zeitgliedes (69) mit einem Schwellwert vergleichen und bei Überschreiten dieser Differenz über den Schwellwert ein Fehlersignal ($F_{DFP}$ bzw. $F_{DIFA}$) erzeugen.

17. Führerbremsventil nach einem oder mehreren Ansprüchen 1 bis 16, *dadurch gekennzeichnet*, daß eine weitere Überwacheinrichtung (86) vorgesehen ist, die das Abklingen des Druckes (zeitlicher Abfall des Druckes) nach einem Füllstoß überwacht und ein Fehlersignal ($F_{Fü}$) erzeugt, wenn der Füllstoß fehlerhafterweise noch nicht abgeklungen ist.

18. Führerbremsventil nach einem oder mehreren Ansprüchen 1 bis 17, *dadurch gekennzeichnet*, daß das Bremsanforderungssignal ($U_{POT}$) einen vorgegebenen konstanten Basiswert aufweist, der in einer weiteren Überwachungseinrichtung (113) überwacht wird, worauf ein Fehlersignal ($F_{BAS}$) erzeugt wird, und daß der Basiswert in einem Subtrahierer (62) vor dem Maximalauswahlschaltkreis (63) von dem Bremsanforderungssignal ($U_{POT}$) subtrahiert wird.

19. Führerbremsventil nach einem oder mehreren Ansprüchen 1 bis 18, *dadurch gekennzeichnet*, daß eine weitere Überwachungseinrichtung (112) vorgesehen ist, die verschiedene Versorgungsspannungen überwacht und bei Abweichungen der Versorgungsspannungen von vorgegebenen oberen und/oder unteren Grenzwerten Fehlersignale ($F_{U1}$, $F_{U2}$, $F_{UGGS}$) erzeugt.

20. Führerbremsventil nach einem oder mehreren Ansprüchen 1 bis 19, *dadurch gekennzeichnet*, daß Eingangssignale der Regel-Elektronik (6) über galvanische Trennungen (48, 49, 50, 52, 53, 54) galvanisch von der Energieversorgung getrennt sind.

21. Führerbremsventil nach einem oder mehreren der Ansprüche 1 bis 20, *dadurch gekennzeichnet*, daß der Füllstoß ohne ein eigenes Magnetventil durchgeführt wird, wobei der Speisedruck zum A-Druckbehälter (12) in diesem Falle bei ca. 10 bar liegt.

22. Führerbremsventil nach Anspruch 1 *dadurch gekennzeichnet*, daß der Strömungssensor (18) in der HB-Leitung (10) die Druckdifferenz ($\Delta P_S$) an einer Meßblende (Strömungshindernis) erfaßt und daß der HL-Druck ($HL_1$) am ersten Steuerventil ($SV_1$) (des ersten Wagens) nachfolgender Beziehung bestimmt wird:

$$HL_1 = HL_M - c\,\Delta P_3$$

wobei $HL_M$ der von dem Drucksensor (16) gemessene Druck in der HL-Leitung und c ein konstanter Faktor ist.

## Claims

1. Driver's brake valve for automatic, indirect action compressed air brakes for rail vehicles with electrical input systems (1 to 5) whose electrical control signals (BRE, LÖE, FÜE, ANE, ATC, AFB and possibly FSA, FSB, ABE) are converted in an electropneumatic converter (E/P converter 7) with brake release and brake application solenoid valves (93, 94) into a pneumatic pilot pressure (A pressure) which controls a relay valve (9) charged via the main air reservoir pipe (10) monitoring the pressure in the main air pipe (HL pressure) wherein a pressure/voltage signal converter (95) generates a signal proportional to said A pressure ($U_{ISTA}$) and an electronic control unit (6) is provided which generates an electrical setpoint signal ($U_{SOLL}$) as the input signal for supply to said E/P converter (7), said setpoint signal being generated as a function of the electrical control signals and the signal of the A pressure ($U_{ISTA}$) measured, *characterized in that* a flow sensor (18) is provided in said main air reservoir pipe (HB) (10) to measure the recharging capacity from the HB pipe (10) (SM signal), and that a pressure sensor (16) is provided in the HL pipe (11) to measure the HL pressure, the output signals from said measuring sensors (16, 18) being utilized to correct the setpoint signal $U_{SOLL}$ and said signals measured being utilized to transform the HL pressure to the pressure level prevailing at the first control valve, due to which the HL pressure can be increased as a function of the pipe length (length of the train) while the duration of the pressure surge is matched with the length of the pipe.

2. Driver's brake valve according to Claim 1, *characterized in that* an electrical brake demand signal ($U_{POT}$) is generated in a stage selector switch, a potentiometer or by the duration of the actuation of an electrical push-button (40, 41; 162) and is monitored by a threshold value switching circuit (64), and is switched to its effective level (switch 68) only when a threshold value ($S_{P2}, S_{P1}$) is reached which corresponds to a first braking stage, that said maximum brake demand signal ($U_{POT}; U_{B1}$) is inverted in a subtracter circuit (67) by subtracting it from a maximum brake demand signal possible ($U_{BMAX}$) and that the pulse rise or pulse fall gradient of said inverted maximum brake demand signal ($U_B$) is limited (time-related change of the signal) in a time limit switching circuit (69).

3. Driver's brake valve according to Claim 2, *characterized in that* a brake demand signal (ATC; AFB) which originates from an automatic train control system (ATC) or an automatic speed and brake control system (AFB) is monitored as well in a threshold value switching circuit and is switched to its effective level (switch 68) only when a threshold value ($S_{A1}, S_{A2}$) is reached which corresponds to a first braking stage and that a maximum value selecting switching circuit (47, 50; 63) is provided which selects the maximum brake demand signal ($U_{B1}$ = maximum of $U_{POT}$, AFB, ATC).

4. Driver's brake valve according to Claim 2 or 3, *characterized in that* said gradient-limited, inverted maximum brake demand signal ($U_{BV1}$) is multiplied (multiplier circuit 7) by a factor ($K_B$) while the output signal ($U_{BV}$) is supplied from said multiplier circuit (7) to an adder circuit (71) where it is processed with corrective quantities ($\Delta U_O$, $U_O$, $U_{FÜ}$, $U_{AG}$) to form the setpoint signal ($U_{SOLL}$).

5. Driver's brake valve according to Claim 4, *characterized in that* said setpoint signal ($U_{SOLL}$) is compared to an actual value signal ($U_{ISTA}$) of the A pressure in a comparator circuit (99), and that the deviation determined in said comparison is utilized to control the brake application solenoid valve (94) or the brake release solenoid valve (93), depending on the sign, through an automatic controller (101) and two sign discriminators (102, 103), so as to set the A pressure.

6. Driver's brake valve according to any of Claims 1 through 5, *characterized in that* a high level limit switch-off circuit (switchable solenoid valve driver amplifiers 104, 105) is provided to suppress the operative control of the brake application and brake release solenoid valves (94, 93) as long as the pressure of the main reservoir (HB pressure) monitored by a pressure switch (146) remains below a predetermined minimum value.

7. Driver's brake valve according to Claim 6, *characterized in that* the limit switchoff circuit (104, 105) is switched to be operative during a period after start of the electrical power supply, which time is determined by a timing circuit (129).

8. Driver's brake valve according to any or several of the preceding Claims 1 through 7, *characterized in that* a pressure surge solenoid valve (96) is provided which connects directly the main reservoir pressure (HB pressure) with the A pressure and that the pulse rise and the pulse fall gradients of said pressure surge signal are limited in timing circuits (83, 84), said gradient-limited pressure surge signal $U_{FÜ}$ contributing to the generation of said setpoint signal ($U_{SOLL}$) in said adder circuit (71).

9. Driver's brake valve according to Claim 8, *characterized in that* said pressure surge demand signal is used to set a flip-flop circuit (89) which excites a cross-section change-over relay (56) to excite a cross-section change-over solenoid valve (145) through a relay contact (58), said solenoid valve opening a valve seat (173) with a large cross section during said pressure surge to establish a communication between the HB pressure and said HL pressure.

10. Driver's brake valve according to Claim 9, *characterized in that* said flip-flop circuit (89) is reset when said A pressure ($U_{ISTA}$) reaches a threshold value ($U_R$) (threshold value switch 90).

11. Driver's brake valve according to Claim 10, *characterized in that* said threshold value switch (90) is reversible.

12. Driver's brake valve according to any Claims 1 through 11, *characterized in that* a frequency-changeable clock generator (73) and a succeeding reversible forward/backward counter (74) with a succeeding digital/analog converter (75) are provided to realize an assimilation feature for the generation of an assimilation signal ($U_{AG}$) which is utilized in the adder circuit (71) for the generation of the setpoint signal $U_{SOLL}$.

13. Driver's brake valve according to Claim 12, *characterized in that* in the assimilation process, after a pressure increase, the pressure is reduced by the counter (74) switched to the backward counting mode, in a manner linear in time (clock generator 73).

14. Driver's brake valve according to any or several of Claims 1 through 13, *characterized in that* the assimilation function is additionally employed for rapid brake release ($U_{B1}$ signal) (changeover switch 85; comparator circuit 78).

15. Driver's brake valve according to any of Claims 12 through 14, *characterized in that* the assimilation process is terminated as soon as the counter (74) has reached a value of zero.

16. Driver's brake valve according to any or several of Claims 1 through 15, *characterized in that* monitoring devices (114, 115) are provided to compare the difference between the brake demand signal ($U_{POTDZW}$ max. from AFB and ATZ) and the output signal ($U_{BV1}$) of the timing circuit (69) against a threshold value, and to generate an error signal ($F_{DIFP}$ or $F_{DIFA}$) if this difference exceeds the threshold value.

17. Driver's brake valve according to any or several of Claims 1 through 16, *characterized in that* an additional monitoring device (86) is provided to monitor the fading of the pressure (decrease of the pressure in time) after a pressure surge, and to generate an error signal ($F_{FÜ}$) if due to a fault the pressure surge will not yet have decayed.

18. Driver's brake valve according to any or several of Claims 1 through 17, *characterized in that* said brake demand signal ($U_{POT}$) will have a predetermined constant basic value which is monitored in an additional monitoring device (113) whereupon an error signal ($F_{BAS}$) will be generated, and that said basic value is subtracted from said brake demand signal ($U_{POT}$) in a subtracter circuit (62) connected upstream of said maximum value selector circuit (63).

19. Driver's brake valve according to any or several of Claims 1 through 18, *characterized in that* an additional monitoring device (112) is provided to monitor the various supply voltages and to generate error signals ($F_{U1}$, $F_{U2}$, $F_{UGGS}$) in the event of any deviation of the supply voltages from predetermined upper and/or lower threshold values.

20. Driver's brake valve according to any or several of Claims 1 through 19, *characterized in that* input signals of the electronic control unit (6) are physically separated from the energy supply through DC-decoupled elements (48, 49, 50, 52, 53, 54).

21. Driver's brake valve according to any or several of Claims 1 through 20, *characterized in that* the pressure surge is achieved without a separate solenoid valve, with the supply pressure to the A pressure reservoir (12) amounting to approximately 10 bar in this case.

22. Driver's brake valve according to Claim 1, *characterized in that* the flow sensor (18) in said HB pipe (10) detects the pressure difference ($P_S$) at an orifice gauge (flow obstacle), and that the HL pressure ($HL_1$) at the first control valve ($SV_1$) (of the first car) is determined by the following relationship:

$$HL_1 = HL_M - c\Delta P_S$$

wherein $HL_M$ corresponds to the pressure in the HL pipe as measured by the pressure sensor (16), and c is a constant factor.

**Revendications**

1. Robinet de frein de mécanicien pour des freins à air comprimé automatiques et à action indirecte, pour véhicules sur rails, avec des dispositifs électriques d'introduction (1 à 5), dont les signaux électriques de commande (BRE, LÖE, FÜE, ANE, ATC, AFB; et éventuellement FSA, FSB, ABE) sont transformés, dans un transducteur électro-pneumatique (transducteur EP 7) à électrovannes de desserrage et de freinage (93, 94), en une pression pneumatique de précommande ou pression pneumatique-pilote (pression A), qui commande une soupape de relais qui est alimentée par une conduite de réservoir d'air principal (10) et qui contrôle la pression (pression HL) qui règne dans une conduite principale (11), un transducteur pression/tension (95) produisant un signal ($U_{ISTA}$) proportionnel à la pression A et une électronique de réglage (6) étant prévue, qui, en fonction des signaux électriques de commande et du signal de la pression A qui a été mesurée ($U_{ISTA}$), produit un signal électrique de valeur de consigne ($U_{SOLL}$) qui est appliqué au transducteur EP (7) en tant que signal d'entrée, caractérisé par le fait qu'il est prévu dans la conduite du réservoir principal (10) un capteur d'écoulement (18) qui mesure la conduite de réalimentation provenant de la conduite du réservoir principal (10) (signal SM) et qu'il est prévu dans la conduite principale (11) un capteur de pression (16) qui mesure la pression HL, étant noté que les signaux de sortie des capteurs de mesure (16, 18) sont utilisés pour corriger le signal de la valeur de consigne ($U_{SOLL}$) et que par ces signaux qui ont été mesurés, la pression HL est transformée en la pression au niveau de la première soupape de commande, grâce à quoi la pression HL est susceptible d'être augmentée en fonction de la longueur de la conduite (longueur du train) et la longueur de l'à-coup de remplissage est adaptée à la longueur de la conduite.

2. Robinet de frein de mécanicien selon la revendication 1, caractérisé par le fait qu'un signal électrique de demande de freinage ($U_{POT}$) qui est produit dans un interrupteur à gradins, dans un potentiomètre ou grâce à la durée de la commande d'un manipulateur électrique (40, 41; 162), est contrôlé par un circuit de valeur de seuil (64), et n'est commuté dans sa position efficace (interrupteur 68) que si une valeur de seuil ($S_{P2}$ $S_{P1}$) qui correspond à un premier palier de freinage, est atteinte, que le signal de demande de freinage ($U_{POT}$; $U_B{}^1$) est inversé dans un soustracteur (67) en étant soustrait d'un signal de demande de freinage maximum possible ($U_{BMAX}$), et que le signal de demande de freinage inversé ($U_B$) est limité, dans un temporisateur (69), du point de vue de son gradient d'accroissement ou de chute (modification temporelle du signal).

3. Robinet de frein de mécanicien selon la revendication 2, caractérisé par le fait qu'un signal de demande de freinage (ATC; AFB), provenant d'une commande automatique du train (ATC) ou d'une commande automatique de marche et de freinage (AFB), est également contrôlé dans un circuit à valeur de seuil et n'est commuté dans sa position efficace (interrupteur 68) que si une valeur de seuil ($S_{A1}$, $S_{A2}$) qui correspond au premier palier de freinage, est atteinte, et qu'il est prévu un circuit de sélection de la valeur maximale (47, 50; 63) qui sélectionne le signal maximum de demande de freinage ($U_{B1}$ = max. de $U_{POT}$, AFB, ATC).

4. Robinet de frein de mécanicien selon la revendication 2 ou 3, caractérisé par le fait que le signal de demande de freinage maximum ($U_{BV1}$) qui est inversé et limité du point de vue du gradient, est multiplié par un facteur ($K_B$) (multiplicateur 7), le signal de sortie ($U_{BV}$) du multiplicateur (7) étant appliqué à un sommateur (71) dans lequel il est introduit avec des grandeurs de correction ($DU_O$, $U_O$, $U_{FU}$, $U_{AG}$), en vue de la formation du signal de valeur de consigne ($U_{SOLL}$).

5. Robinet de frein de mécanicien selon la revendication 4, caractérisé par le fait que le signal de valeur de consigne ($U_{SOLL}$) est comparé, dans un comparateur (99), au signal de valeur instantanée ($U_{ISTA}$) de la pression A, et que l'écart de régulation, qui en est déduit, est utilisé, par l'intermédiaire d'un régulateur (101) et de deux discriminateurs de signes (102, 103), un discriminateur par signe, pour l'attaque de l'électrovanne de freinage (94) ou de l'électrovanne de desserrage (93), grâce à quoi la pression A se trouve ajustée.

6. Robinet de frein de mécanicien selon l'une des revendications 1 à 5, caractérisé par le fait qu'il est prévu un circuit de débranchement de l'étage de sortie (amplificateur commutable des électrovannes 104, 105), qui interdit l'attaque des électrovannes de freinage et de desserrage (94, 93) tant que la pression qui règne dans le réservoir principal (pression HB), contrôlée par un interrupteur manométrique (146), passe en-dessous d'une valeur minimale prédéterminée.

7. Robinet de frein de mécanicien selon la revendication 6, caractérisé par le fait que le circuit de débranchement de l'étage de sortie (104, 105) est branché dans son état de fonctionnement ou efficace pendant une durée prédéterminée par un circuit de temporisation (129), après le branchement d'une source d'énergie électrique.

8. Robinet de frein de mécanicien selon une ou plusieurs des revendications 1 à 7, caractérisé par le fait qu'il est prévu une électrovanne (96) pour des à-coups de remplissage, laquelle électrovanne relie la pression du réservoir principal (pression HB) directement avec la pression A, et que le signal du remplissage par à-coups est limitée, dans des dispositifs de temporisation (83, 84), du point de vue de son gradient croissant ou décroissant, le signal du remplissage par à-coups ($U_{FU}$), limité du point de vue des gradients, participant, dans le sommateur (71), à la formation du signal de valeur de consigne ($U_{SOLL}$).

9. Robinet de frein de mécanicien selon la revendication 8, caractérisé par le fait qu'avec le signal de demande d'un à-coup de remplissage, un multivibrateur bistable (89) est activé, lequel multivibrateur bistable excite un relais de changement de la section transversale (56), grâce à quoi, et par l'intermédiaire d'un contact de relais (58), se trouve excitée une électrovanne de changement de section transversale (145), qui, pendant l'à-coup de remplissage, ouvre le siège de soupape de grande section transversale, reliant la pression HB à la pression HL.

10. Robinet de frein de mécanicien selon la revendication 9, caractérisé par le fait que le multivibrateur bistable (89) est désactivé si la pression A (signal $U_{ISTA}$) a atteint une valeur de seuil ($U_R$) (interrupteur à valeur de seuil 90).

11. Robinet de frein de mécanicien selon la revendication 10, caractérisé par le fait que l'interrupteur à valeur de seuil (90) est commutable.

12. Robinet de frein de mécanicien selon l'une des revendications 1 à 11, caractérisé par le fait que pour réaliser une fonction d'équilibrage, il est prévu un générateur de cadence (73) commutable en fonction de la fréquence et un compteur progressif-dégressif commutable, monté en aval (74) et en aval duquel est prévu un convertisseur numérique/analogique (75) pour produire un signal d'équilibrage ($U_{AG}$) qui est utilisé dans le sommateur (71) pour former le signal de valeur de seuil ($U_{SOLL}$).

13. Robinet de frein de mécanicien selon la revendication 12, caractérisé par le fait que lors du processus d'équilibrage, et après un accroissement de la pression, la pression est abaissée, linéairement en fonction du temps (générateur de cadence 73), à l'aide du compteur (74) qui est commuté pour agir comme compteur régressif.

14. Robinet de frein de mécanicien selon une ou plusieurs des revendications 1 à 13, caractérisé par le fait que la fonction d'équilibrage est utilisée en plus dans le cas d'un desserrage rapide (signal $U_{B1}$) (commutateur 85: comparateur 78).

15. Robinet de frein de mécanicien selon l'une des revendications 12 à 14, caractérisé par le fait que le processus d'équilibrage est terminé lorsque le compteur (74) a atteint la valeur zéro.

16. Robinet de frein de mécanicien selon une ou plusieurs des revendications 1 à 15, caractérisé par le fait que sont prévus des dispositifs de contrôle (114, 115) qui comparent la différence entre le signal de demande de freinage ($U_{POTDZW}$ max. aus AFB et ATZ) et le signal de sortie ($U_{BVI}$) du temporisateur (69) avec une valeur de seuil et qui produisent un signal d'erreur ($F_D'FP$ ou $F_{DIFA}$) lorsque cette différence se situe au-delà de la valeur de seuil.

17. Robinet de frein de mécanicien selon une ou plusieurs des revendications 1 à 16, caractérisé par le fait qu'il est prévu un dispositif de contrôle supplémentaire (86) qui contrôle la suppression de la pression (chute de la pression en fonction du temps), après un à-coup de remplissage, et produit un signal d'erreur ($F_{FÜ}$) lorsque l'à-coup de remplissage n'a pas encore été, par erreur, supprimé.

18. Robinet de frein de mécanicien selon une ou plusieurs des revendications 1 à 17, caractérisé par le fait que le signal de demande de freinage ($U_{POT}$) présente une valeur de base constante et prédéterminée, laquelle est contrôlée dans un dispositif de contrôle supplémentaire (113), ce qui conduit à la formation d'un signal d'erreur ($F_{BAS}$), et que la valeur de base est soustraite, dans un soustracteur (62) situé en amont du circuit de commutation de la sélection de la valeur maximale (63), du signal de demande de freinage ($U_{POT}$).

19. Robinet de frein de mécanicien selon une ou plusieurs des revendications 1 à 18, caractérisé par le fait qu'il est prévu un dispositif de contrôle supplémentaire (112) qui contrôle différentes tensions d'alimentation et qui, lors d'écarts des tensions d'alimentation de valeurs limites supérieures et/ou inférieures et prédéterminées, produit des signaux d'erreurs ($F_{U1}$, $F_{U2}$, $F_{UGGS}$).

20. Robinet de frein de mécanicien selon une ou plusieurs des revendications 1 à 19, caractérisé par le fait que des signaux d'entrée de l'électronique de réglage (6) sont séparés galvaniquement de l'alimentation en énergie, par des moyens de séparation galvaniques (48, 49, 50, 52, 53, 54).

21. Robinet de frein de mécanicien selon une ou plusieurs des revendications 1 à 20, caractérisé par le fait que l'à-coup de remplissage est réalisé sans électrovanne propre, la pression d'alimentation du réservoir de pression A (12) se situant, dans ce cas, à environ 10 bar.

22. Robinet de frein de mécanicien selon la revendication 1, caractérisé par le fait que le capteur ou détecteur d'écoulement (18) dans la conduite HB (10) saisit la différence de pression ($DP_S$) au niveau d'un diaphragme de mesure (obstacle à l'écoulement), et que la pression HL ($HL_1$) au niveau de la première soupape de contrôle ($SV_1$) (du premier véhicule) est déterminée par la relation suivante:

$$HL_1 = HL_M - c\Delta P_3,$$

relation dans laquelle $HL_M$ représente la pression mesurée par le détecteur ou capteur de pression (16) dans la conduite HL et c représentant un facteur constant.

FIG. 1

**FIG. 2**

FIG. 3

FIG. 4

NB 1B  27  33  0  32

SIFA  25

NB 1A  26  28

FSA  2

AFB  4

ATC  5

FSB  3

ELEKTRONIK  6

Notbremsschleife
(Ruhestromprinzip)  24  29  15

EP WANDLER  8

A  12

AB  34

RELAISVENTIL  9

AB  35

SVI  36  0

NB 1A  31  0  30

37  10  11

HB

HL

FIG. 5

aus Stromversorgung

21 V

42 — Stabil.

43 — Stabil.

40 — Stufen-schalter

a1 →

a2 →

41 — Stufen-schalter

U / I — 45

44 — U / I

a 13

$U_{POT}$

Bremssollwert

2 - 12 mA

a 14

$U_{POT}$

**FIG. 5A**

$U_{BAT}$

+ Null

111 — =

Karte
Stromversorgung

112 — Fehler-über-wach.

$F_{U1}$

$F_{U2}$

$F_{U\,GES}$

+ 12V

- 12V

+ 15V

+ 21V

Anzeige

**FIG. 5F**

FIG. 5 B

**FIG. 5C**

Karte Sollwertbildung

Lösedruck-Korrektur

Einschalt-verzögerung

Funktionsanzeige

**FIG. 5D**

**FIG. 5 E**

FIG. 5 G

HL

SV$_1$

Kompressor

HB

11

16

17

9

A HL

10

ΔP

18

101 Regler

U$_{ISTA}$

HL - Druck

99

98

130

97 Regler

SM

19

K 131

132

ZT

V - Kontrolle

71

U$_{SOLL}$

Gradient

ANE

U$_{B1}$

Angt./ Füllst.

FIG. 6

FIG. 7

FIG. 8

# FIG. 8 A

154

148

2

ANGLEICHER

150

POT

SB   Fü

162

E-BREMSE

# FIG. 8 B

SCHLOSS

152

a

b

0

+    −

EP 0 152 958 B2

FIG. 8C

REGEL-ELEKTRONIK

33

## FIG. 8 D

SCHLOSS 153

5

ATC

25

SI-TASTE

+

C    c1    c2

D2

D1

168    159    161    141

FIG. 8 E

FIG. 8 F

FIG. 8 G

FIG. 8H

FIG. 8I

FIG. 8 K

## FIG. 8 L

| FIG. 8 A | FIG. 8 B | FIG. 8 C | FIG. 8 D | FIG. 8 E |
|---|---|---|---|---|
| FIG. 8 F | FIG. 8 G | FIG. 8 H | FIG. 8 I | FIG. 8 K |

| FSA | FSB | ABE | LÖE | BRE | ANE | FÜE | O.W | BETÄTIGUNG | FUNKTION |
|---|---|---|---|---|---|---|---|---|---|
| O | O | O | O | O | O | O | O | SCHLOSS: 0<br>SCHALTER: BETRIEB<br>FÜHRERTISCH: 0 | AUS |
| O | O | O | O | O | O | O | O | SCHLOSS: I<br>SCHALTER: BETRIEB<br>FÜHRERTISCH: 0 | AUS |
| U<br>O | O<br>U | U<br>U | O<br>O | U<br>U | O<br>O | O<br>O | O<br>O | SCHLOSS: I<br>SCHALTER: BETRIEB<br>FÜHRERTISCH: FÜHRERT.<br>HEBEL: BREMSE KONST. | BREMSKRAFT<br>KONSTANT<br>(WERKSTATT) |
| U<br>O | O<br>U | U<br>U | O<br>O | O<br>O | O<br>O | O<br>O | O<br>O | SCHLOSS: I<br>SCHALTER: BETRIEB<br>FÜHRERTISCH: FÜHRERT.<br>HEBEL: BREMSEN | EINBREMSEN<br>(WERKSTATT) |
| U<br>O | O<br>U | U<br>U | U<br>U | U<br>U | O<br>O | O<br>O | O<br>O | SCHLOSS: I<br>SCHALTER: BETRIEB<br>FÜHRERTISCH: FÜHRERT.<br>HEBEL: NEUTRAL | LÖSEN<br>(WERKSTATT) |
| U<br>O | O<br>U | O<br>O | O<br>O | U<br>U | O<br>O | O<br>O | O<br>O | SCHLOSS: I<br>SCHALTER: DICHTH. PROBE<br>FÜHRERTISCH: FÜHRERT.<br>HEBEL: BREMSE KONST. | DICHTHEITS<br>PROBE<br>(WERKSTATT) |
| U<br>O | O<br>U | U<br>U | U<br>U | U<br>U | O<br>O | O<br>O | U<br>U | SCHLOSS: I<br>SCHALTER: AUFPUMPEN<br>FÜHRERTISCH: FÜHRERT.<br>HEBEL: NEUTRAL | AUFPUMPEN<br>(WERKSTATT) |
| O | O | O | O | O | O | O | O | SCHLOSS: II<br>SCHALTER: BETRIEB<br>FÜHRERTISCH: 0 | AUS |
| U<br>O | O<br>U | U<br>U | O<br>O | U<br>U | O<br>O | O<br>O | O<br>O | SCHLOSS: II<br>SCHALTER: BETRIEB<br>FÜHRERTISCH: FÜH.- ZUGK.<br>HEBEL: BREMSE KONST. | BREMSKRAFT<br>KONSTANT |

## FIG. 9A

| FSA | FSB | ABE | LÖE | BRE | ANE | FÜE | QW | BETÄTIGUNG | FUNKTION |
|---|---|---|---|---|---|---|---|---|---|
| U O | O U | U U | O O | O O | O O | O O | O O | SCHLOSS: II<br>SCHALTER: BETRIEB<br>FÜHRERTISCH: FÜH.-ZUGK.<br>HEBEL: BREMSEN | EINBREMSEN |
| U O | O U | U U | U U | U U | O O | O O | O O | SCHLOSS: II<br>SCHALTER: BETRIEB<br>FÜHRERTISCH: FÜH.-ZUGK.<br>HEBEL: NEUTRAL | LÖSEN<br>(KEINE BREMSKRAFT) |
| U O | O U | O O | O O | U U | O O | O O | O O | SCHLOSS: II<br>SCHALTER: DICHTH. PROBE<br>FÜHRERTISCH: HAUPTSCHALTER<br>HEBEL: BREMSE KONST. | DICHTHEITS<br>PROBE<br>BETRIEB |
| U O | O U | U U | U U | U U | O O | O O | U U | SCHLOSS: II<br>SCHALTER: AUFPUMPEN<br>FÜHRERTISCH: HAUPTSCHALT.<br>HEBEL: NEUTRAL | AUFPUMPEN<br>BETRIEB |
| U O | O U | U U | U U | O O | O O | O O | O O | SCHLOSS: II<br>SCHALTER: BETRIEB<br>FÜHRERTISCH: FÜH.-ZUGK.<br>HEBEL: NEUTRAL<br>RANGIERTASTE: STOP | EINBREMSEN<br>ÜBER<br>RANGIER STOP |
| U O | O U | U U | O O | U U | U U | O O | O O | SCHLOSS: II<br>SCHALTER: BETRIEB<br>FÜHRERTISCH: FÜH.-ZUGK.<br>HEBEL: BREMSE KONST.<br>ANGLEICHERTASTE | ANGLEICHEN |
| U O | O U | U U | U U | U U | U U | O O | O O | SCHLOSS: II<br>SCHALTER: BETRIEB<br>FÜHRERTISCH: FÜH.-ZUGK.<br>HEBEL: NEUTRAL - ZUGK.<br>ANGLEICHERTASTE | ANGLEICHEN<br>↓<br>LÖSEN |
| U O | O U | U U | U U | U U | O O | U U | U U | SCHLOSS: II<br>SCHALTER: BETRIEB<br>FÜHRERTISCH: FÜH.-ZUGK.<br>HEBEL: BREMSE K.-ZUGK.<br>FÜLLSTOSSTASTE KURZ | VOLL - LÖSEN |
| U O | O U | U U | U U | U U | O O | U U | U U | SCHLOSS: II<br>SCHALTER: BETRIEB<br>FÜHRERTISCH: FÜH.-ZUGK.<br>HEBEL: BREMSE K.-ZUGK.<br>FÜLLSTOSSTASTE LANG | VOLL-LÖSEN<br>↓<br>MAN. FÜLLSTOSS |

## FIG. 9B

# *FIG. 9 C*

MÖGLICHE EINGANGSSIGNAL - KOMBINATIONEN BEI FUNKANSTEUERUNG:

| FSA | FSB | ABE | LÖE | BRE | ANE | FÜE | Q.W | FUNKTION |
|-----|-----|-----|-----|-----|-----|-----|-----|----------|
| O | O | U | O | U | O | O | O | BREMSKRAFT KONSTANT |
| O | O | U | O | O | O | O | O | EINBREMSEN |
| O | O | U | U | U | O | O | O | LÖSEN |
| O | O | U | O | U | U | O | O | ANGLEICHEN |
| O | O | U | U | U | U | O | O | ANGLEICHEN + LÖSEN |
| O | O | U | O | U | O | U | U | VOLL - LÖSEN (FÜE - TASTE <u>KURZ</u>) |
| O | O | U | O | U | O | U | U | VOLL - LÖSEN + MAN. FÜLLSTOSS (FÜE - TASTE <u>LANG</u>) |

UNZULÄSSIGE EINGANGSSIGNAL - KOMBINATIONEN

| FSA | FSB | ABE | LÖE | BRE | ANE | FÜE | |
|-----|-----|-----|-----|-----|-----|-----|---|
| U ←→ U | | O,U | O,U | O,U | O,U | O,U | AUFTRETEN FÜHRT ZUR VOLLBREMSUNG |
| O,U | O,U | O ←→ U | | O,U | O,U | O,U | |
| O,U | O,U | U | O | O ←→ U | | O | |
| O,U | O,U | U | O | O | O | U | |
| O,U | O,U | U | O | O ←→ U | | U | |

WIⅡDERSPRÜCHE

84 W, 1", DICHT, MIT UIC DÜSE
DESGL., MIT ZUGTRENNUNG 10 mm

## FIG. 10

FIG. 11

FIG. 12

FIG. 13

ANGLEICHERBETÄTIGUNG

$U_{AG}$

$U_{AG\ MAX}$

TANA

TANE

$U_{AG}$

$U_{BV}$

EIN

AUS

t →

FIG. 14

$U_{SOLL}$

ANGLEICHER-ÜBERHÖHUNG

ABSENKEN ÜBER GRADIENTEN TANA

$U_{SOLL}$
$U_{BV}$

$U_{BV}$

$U_{BV}$

$T_{BE}$

$T_{BA}$

t →

FIG. 15